(19)

Europäisches
Patentamt
European
Patent Office
Office européen
des brevets

(11) **EP 4 328 796 A1**

(12) **EUROPEAN PATENT APPLICATION**
published in accordance with Art. 153(4) EPC

(43) Date of publication:
**28.02.2024 Bulletin 2024/09**

(21) Application number: **21938190.2**

(22) Date of filing: **25.04.2021**

(51) International Patent Classification (IPC):
**G06K 9/62** [(2022.01)]

(86) International application number:
**PCT/CN2021/089692**

(87) International publication number:
**WO 2022/226699 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **WANG, Zhenyang**
**Shenzhen, Guangdong 518129 (CN)**

• **ZHAO, Yaxi**
**Shenzhen, Guangdong 518129 (CN)**
• **XU, Wenkang**
**Shenzhen, Guangdong 518129 (CN)**
• **HUANG, Wei**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) **TEMPLATE COLLECTION METHOD, APPARATUS AND SYSTEM**

(57) This application relates to the fields of computer vision and intelligent vehicles. An embodiment of this application provides a facial template collection method. The method includes: obtaining first image information collected by a sensor; obtaining, from pre-stored template image information, template image information in a same domain with the first image information; when the first image information does not match the template image information in the same domain, obtaining, from the pre-stored template image information, template image information in a different domain from the first image information; and updating the pre-stored template image information based on the first image information when the first image information matches the template image information in the different domain. Therefore, recognition precision can be improved while a simple operation process is ensured.

FIG. 3

EP 4 328 796 A1

**Description**

**TECHNICAL FIELD**

This application relates to the fields of computer vision and intelligent vehicles, and in particular, to a template collection method, apparatus, and system.

**BACKGROUND**

A biometric recognition technology based on computer vision, for example, a facial recognition (facial recognition) technology, is applied to a terminal, for example, an intelligent vehicle or a smartphone, and is used to perform identity recognition based on a facial feature of a person. Usually, a comparison method is used for facial recognition. By comparing a similarity between a facial image and a pre-collected standard image (also referred to as a template image), whether the facial image and the template image indicate a same person is determined. Usually, a domain (domain) of an image may be divided based on any information related to the image, namely, image-related information. Images in a same domain have at least one piece of same image-related information. Usually, if the facial image and the template image belong to a same domain, that is, facial recognition is performed in the same domain, recognition precision is higher. If the facial image and the template image belong to different domains, that is, facial recognition is performed in different domains, the recognition precision is reduced.

In a facial recognition method in the conventional technology, when facing a problem of cross-domain facial recognition, a user is required to register only one template or a plurality of templates. If the user is required to register only one template, the template is used for recognizing all types of facial images. Recognition precision varies significantly when the facial images and the template are in a same domain or different domains. If the user is required to register a plurality of templates, different templates may be selected based on facial images for comparison, so that recognition precision can be correspondingly improved. However, a process of registering the plurality of templates is complex, which makes the user feel troublesome. In conclusion, the facial recognition method in the conventional technology cannot implement a simple operation process and improve recognition precision at the same time.

**SUMMARY**

This application provides a template collection method, apparatus, and system, to improve recognition precision while ensuring a simple operation process.

According to a first aspect, a template collection method is provided, where the template collection method includes: obtaining first image information from a sensor; and obtaining pre-stored template image information based on a domain to which the first image information belongs, where the template image information is used for comparison with the first image information. The sensor may be a camera or a radar. The radar may include a lidar, a millimeter wave radar, and an ultrasonic radar. The pre-stored template image information may be stored locally and/or in a cloud.

According to the template collection method in the first aspect, the pre-stored template image information is obtained based on the domain to which the first image information belongs, so that appropriate pre-stored template image information can be selected for comparison with the first image information, to reduce impact of a difference between domains to which the first image information and the pre-stored template image information belong on recognition precision and improve recognition precision.

In a possible implementation of the first aspect, second template image information is preferentially obtained for comparison with the first image information, where the second template image information is pre-stored same-domain template image information of the first image information. Being same-domain means belonging to a same domain.

In this manner, the pre-stored same-domain template image information of the first image information is preferentially obtained for comparison with the first image information, so that same-domain comparison can be preferentially performed, thereby ensuring recognition precision. A reason is that for a same target object, a difference between features of two same-domain images is less than a difference between features of two cross-domain images. Therefore, in a case of same-domain comparison, feature comparison can be more accurately performed, and a rejection rate can be reduced.

In a possible implementation of the first aspect, when there is no second template image information, the first template image information is obtained for comparison with the first image information, where the first template image information is pre-stored cross-domain template image information of the first image information. Being cross-domain means belonging to different domains.

In this manner, the first template image information that is in a domain different from the first image information is obtained, so that cross-domain recognition can be performed, thereby increasing recognition flexibility.

In a possible implementation of the first aspect, a category of a target object included in the first image information is first recognized, and template image information that is in the pre-stored template image information and that includes a target object of a same category is obtained based on a domain to which the first image information belongs. The category of the target object may be determined based on an identity, an attribute, or a feature of the target object. The category of the target object may include one or more of a male, a female, an adult, or a child.

In this manner, when a quantity of pre-stored template image information is large, preliminary screening is performed by first recognizing the category of the target object, to narrow a range in which comparison needs to be performed, thereby reducing a computation amount during image information comparison and ensuring real-time performance.

In a possible implementation of the first aspect, the template collection method further includes: comparing the first image information with the obtained pre-stored template image information, and authentication succeeds when the first image information matches the obtained pre-stored template image information. When a similarity between a target object included in the first image information and a target object included in the obtained template image information is greater than a specified threshold, the first image information matches the obtained template image information.

In a possible implementation of the first aspect, the template collection method further includes: when the first image information is compared with the obtained first template image information, and authentication succeeds, updating the pre-stored template image information based on the first image information. The updating may be adding template image information generated based on the first image information.

In this manner, when cross-domain comparison is performed and authentication succeeds, the pre-stored template image information is updated, so that a facial template of a domain in which a user does not register a template can be automatically collected. This ensures a simple process, increases a probability of performing same-domain comparison in a subsequent authentication process, and can improve recognition precision.

In a possible implementation of the first aspect, the template collection method further includes: when authentication fails, sending prompt information to the user, where the prompt information is used to prompt the user to register a template. The prompt information may be sent to the user when the user fails to be authenticated by using the first image information but succeeds in another manner. The another manner includes one or more of a password, a verification code, a fingerprint, a voiceprint, or an iris.

In this manner, the user is prompted to register a template. If the user choose to register the template, authentication does not need to be performed in another manner each time, thereby reducing a user operation process.

According to a second aspect, a template collection method is provided, where the template collection method includes the following steps: obtaining first image information from a sensor; obtaining pre-stored template image information; and preferentially comparing second template image information with the first image information, where the second image information is template image information that is in the pre-stored template image information and belongs to a same domain with the first image information. When there is no second template image information, first template image information is compared with the first image information, where the first template image information is template image information that is in the pre-stored template image information and belongs to a different domain from the first image information.

According to the template collection method in the second aspect, recognition precision can be ensured by preferentially comparing the second template image information and the first image information in the same domain.

In a possible implementation of the second aspect, the template collection method further includes: when the first image information is compared with the obtained first template image information, and authentication succeeds, updating the pre-stored template image information based on the first image information. The updating may be adding template image information generated based on the first image information.

In this manner, when cross-domain comparison is performed and authentication succeeds, the pre-stored template image information is updated, so that a facial template of a domain in which a user does not register a template can be automatically collected. This ensures a simple process, increases a probability of performing same-domain comparison in a subsequent authentication process, and can improve recognition precision.

In a possible implementation of the second aspect, the template collection method further includes: when authentication fails, sending prompt information to the user, where the prompt information is used to prompt the user to register a template. The prompt information may be sent to the user when the user fails to be authenticated by using the first image information but succeeds in another manner. The another manner includes one or more of a password, a verification code, a fingerprint, a voiceprint, or an iris.

In this manner, the user is prompted to register a template. If the user choose to register the template, authentication does not need to be performed in another manner each time, thereby reducing a user operation process.

According to a third aspect, a template collection method is provided, where the template collection method includes: obtaining collected first image information; obtaining first template image information from pre-stored template image information, where the first template image information and the first image information belong to different domains; and updating the pre-stored template image information based on the first image information when the first image information matches the first template image information. The first image information may be from a sensor. The sensor includes a camera and a radar. The updating may be adding template image information generated based on the first image information. Updating may alternatively be replacing the template image information used when authentication succeeds.

According to the template collection method in the third aspect, when the first image information matches the first template image information, that is, when cross-domain comparison is performed and authentication succeeds, the pre-stored template image information is updated, so that a facial template of a domain in which the user does not register a template can be automatically collected, and the user does not need to perform a complex operation such as registering a template based on each domain, thereby increasing a probability of performing same-domain comparison with relatively high precision in a subsequent authentication process. Therefore, recognition precision can be improved while a simple operation process is ensured.

In a possible implementation of the third aspect, the obtaining first template image information from pre-stored template image information specifically includes: obtaining second template image information from the pre-stored template image information, where the second template image information and the first image information belong to a same domain; and obtaining the first template image information from the pre-stored template image information when the second template image information does not match the first image information.

In this manner, the second template image information in the same domain with the first image information is first obtained, and the first template image information in a different domain from the first image information is obtained only when the first image information does not match the second template image information. Therefore, whether the first image information matches the same-domain second template image information can be preferentially determined, thereby ensuring recognition precision.

In a possible implementation of the third aspect, the template collection method further includes: obtaining collected second image information; obtaining the second template image information from the pre-stored template image information, where the second template image information and the second image information belong to a same domain; and updating the pre-stored template image information based on the second image information when the second image information matches the second template image information, and a registration time of the second template image information exceeds a time threshold. The second image information may be from a sensor. The sensor that collects the second image information may be the same as or different from the sensor that collects the first image information. Updating may be replacing the second template image information that matches the second image information.

In this manner, when the second image information matches the second template image information, and the registration time of the second template image information exceeds the time threshold, a feature of a target object included in the second template image information may have changed slightly compared with an original feature. In this manner, even if there is the template image information of the domain, the pre-stored template image information is updated, so that a rejection rate can be reduced, and recognition precision can be improved.

In a possible implementation of the third aspect, the template collection method further includes: obtaining collected second image information; obtaining the second template image information from the pre-stored template image information, where the second template image information and the second image information belong to a same domain; and updating the pre-stored template image information based on the second image information when a matching degree between the second image information and the second template image information is greater than a first threshold and less than a second threshold.

In this manner, when the second image information matches the second template image information, but the matching degree is low, a feature of a target object included in the second template image information may have changed slightly compared with an original feature. In this manner, even if there is the template image information of the domain, the pre-stored template image information is updated, so that a rejection rate can be reduced, and recognition precision can be improved.

In a possible implementation of the third aspect, the template collection method further includes: obtaining collected second image information, where the second image information includes a plurality of pieces of image information; obtaining the pre-stored second template image information, where the second template image information and the second image information belong to a same domain; and updating the pre-stored template image information based on the second image information when the second image information does not match the second template image information, and the user is authenticated in another authentication manner, and a quantity of times of successful authentication in the another authentication manner exceeds a specified threshold. The plurality of pieces of image information may be image information continuously collected within a specific time period. In this case, the pre-stored template image information is updated by adding new template image information.

In this manner, when authentication by using the second image information fails, but the user is authenticated in another authentication manner for a plurality of times, the pre-stored template image information is directly updated without obtaining consent of the user. Therefore, system security is ensured and operation processes of the user are reduced.

In a possible implementation of the third aspect, the template collection method further includes: when a matching degree between the first image information and the first template image information is greater than a third threshold, the first image information matches the first template image information; and the second image information matches the second template image information when the matching degree between the second image information and the second template image information is greater than a fourth threshold, where the third threshold is different from the fourth threshold.

In this manner, the matching degree threshold used for same-domain comparison is different from the matching degree threshold used for cross-domain comparison, so that the target object can be properly recognized separately for a difference between same-domain comparison and cross-domain comparison, thereby reducing a rejection rate and improving recognition precision.

In a possible implementation of the third aspect, when the matching degree between the first image information and the first template image information is greater than the third threshold, the first image information matches the first template image information, and the template collection method further includes: obtaining collected third image information; obtaining third template image information from the pre-stored template image information, where the third template image information and the third image information belong to different domains, and the third template image information and the first template image information belong to different domains; and updating the pre-stored template image information based on the third image information when the third image information matches the third template image information, where when a matching degree between the third image information and the third template image information is greater than the third threshold, the third image information matches the third template image information. The third image information may be from a sensor. The sensor that collects the third image information may be the same as or different from the sensor that collects the first image information and the sensor that collects the second image information.

In this manner, when cross-domain comparison is performed between the image information collected and the pre-stored template image information between any two domains in a plurality of domains, a same threshold is used. Therefore, even if a quantity of domains increases or changes, only a threshold needs to be reselected, and an algorithm does not need to be retrained, thereby ensuring that the algorithm can be used for a long time.

In a possible implementation of the third aspect, the domain is used to indicate one or more features of a format, a color, or a source of the image information.

In a possible implementation of the third aspect, the domain includes an RGB domain and an IR domain. An image that is collected in a visible light band and records color information may belong to the RGB domain. Specifically, for example, an RGB image may belong to the RGB domain. An image that is collected in an infrared band and does not record color information may belong to the IR domain. The domain may further include a grayscale domain. An image that is collected in a visible light band and does not record color information may belong to the grayscale domain.

In this manner, a domain to which an image belongs is determined based on a color feature of the image. Based on this, template image information of a corresponding domain is automatically collected, thereby improving recognition precision.

In a possible implementation of the third aspect, the template collection method further includes: sending prompt information to the user, where the prompt information is used to request the user to agree to update the pre-stored template image information, or notify the user that the pre-stored template image information is updated. When the user is requested for an update and agrees to the update, another authentication manner can be used to verify a right of the user.

In this manner, the template image information can be updated more accurately by requesting the user to agree to update the template image information. The user is notified that the template image information is updated, so that a right to know of the user is ensured.

According to a fourth aspect, a template collection apparatus is provided, and the template collection apparatus includes an obtaining module and a processing module, where the obtaining module is configured to obtain collected first image information; the obtaining module is further configured to obtain first template image information from pre-stored template image information, where the first template image information and the first image information belong to different domains; and the processing module is configured to update the pre-stored template image information based on the first image information when the first image information matches the first template image information.

By using the template collection apparatus in the fourth aspect, a facial template of a domain in which a user does not register a template can be automatically collected, and the user does not need to perform a complex operation such as registering a template based on each domain, thereby increasing a probability of performing same-domain comparison with relatively high precision in a subsequent authentication process. Therefore, by using the template collection method, recognition precision can be improved while a simple operation process is ensured.

In a possible implementation of the fourth aspect, the obtaining module is further configured to obtain second template image information from the pre-stored template image information, where the second template image information and the first image information belong to a same domain; and the obtaining module is further configured to obtain the first template image information from the pre-stored template image information when the second template image information does not match the first image information.

In this manner, whether the first image information matches the second template image information that is in a same domain with the first image information can be preferentially determined, to ensure recognition precision.

In a possible implementation of the fourth aspect, the obtaining module is further configured to obtain collected second image information; the obtaining module is further configured to obtain the second template image information from the pre-stored template image information, where the second template image information and the second image information belong to a same domain; and the processing module is further configured to update the pre-stored template image information based on the second image information when the second image information matches the second template image information and a registration time of the second template image information exceeds a time threshold.

In this manner, when a feature of a target object included in the second template image information may have changed slightly compared with an original feature, even if there is the template image information of the domain, the pre-stored template image information is updated, so that a rejection rate can be reduced, and recognition precision can be improved.

In a possible implementation of the fourth aspect, the obtaining module is further configured to obtain collected second image information; the obtaining module is further configured to obtain the second template image information from the pre-stored template image information, where the second template image information and the second image information belong to a same domain; and the processing module is further configured to update the pre-stored template image information based on the second image information when a matching degree between the second image information and the second template image information is greater than a first threshold and less than a second threshold.

In this manner, when a feature of a target object included in the second template image information may have changed slightly compared with an original feature, even if there is the template image information of the domain, the pre-stored template image information is updated, so that a rejection rate can be reduced, and recognition precision can be improved.

In a possible implementation of the fourth aspect, the obtaining module is further configured to obtain collected second image information, where the second image information includes a plurality of pieces of image information; the obtaining module is further configured to obtain the pre-stored second template image information, where the second template image information and the second image information belong to a same domain; and the processing module is further configured to update the pre-stored template image information based on the second image information when the second image information does not match the second template image information, and the user is authenticated in another authentication manner, and a quantity of times of successful authentication in the another authentication manner exceeds a specified threshold.

In this manner, when authentication by using the second image information fails, but the user is authenticated in another authentication manner for a plurality of times, the pre-stored template image information is directly updated without obtaining consent of the user. Therefore, system security is ensured and operation processes of the user are reduced.

In a possible implementation of the fourth aspect, when a matching degree between the first image information and the first template image information is greater than a third threshold, the first image information matches the first template image information; and the second image information matches the second template image information when the matching degree between the second image information and the second template image information is greater than a fourth threshold, where the third threshold is different from the fourth threshold.

In this manner, the matching degree threshold used for same-domain comparison is different from the matching degree threshold used for cross-domain comparison, so that the target object can be properly recognized separately for a difference between same-domain comparison and cross-domain comparison, thereby reducing a rejection rate and improving recognition precision.

In a possible implementation of the fourth aspect, when the matching degree between the first image information and the first template image information is greater than the third threshold, the first image information matches the first template image information; the obtaining module is further configured to obtain collected third image information; the obtaining module is further configured to obtain third template image information from the pre-stored template image information, where the third template image information and the third image information belong to different domains, and the third template image information and the first template image information belong to different domains; and the processing module is further configured to update the pre-stored template image information based on the third image information when the third image information matches the third template image information, where the third image information matches the third template image information when a matching degree between the third image information and the third template image information is greater than the third threshold.

In this manner, when cross-domain comparison is performed between the image information collected and the pre-stored template image information between any two domains in a plurality of domains, a same threshold is used. Therefore, even if a quantity of domains increases or changes, only a threshold needs to be reselected, and an algorithm does not need to be retrained, thereby ensuring that the algorithm can be used for a long time.

In a possible implementation of the fourth aspect, the domain is used to indicate one or more features of a format, a color, or a source of the image information.

In a possible implementation of the fourth aspect, the domain includes an RGB domain and an IR domain.

In this manner, a domain to which an image belongs is determined based on a color feature of the image. Based on this, template image information of a corresponding domain is automatically collected, thereby improving recognition precision.

In a possible implementation of the fourth aspect, the processing module is further configured to send prompt information to the user, where the prompt information is used to request the user to agree to update the pre-stored template image information, or notify the user that the pre-stored template image information is updated.

In this manner, the template image information can be updated more accurately by requesting the user to agree to update the template image information. The user is notified that the template image information is updated, so that a right to know of the user is ensured.

According to a fifth aspect, a template collection system is provided, where the template collection system includes a template collection apparatus and a server. The template collection apparatus is configured to send collected first image information. The server is configured to receive the first image information from the template collection apparatus. The server is further configured to obtain first template image information from pre-stored template image information, where the first template image information and the first image information belong to different domains. The server is further configured to update the pre-stored template image information based on the first image information when the first image information matches the first template image information.

By using the template collection system in the fifth aspect, a facial template of a domain in which a user does not register a template can be automatically collected, and the user does not need to perform a complex operation such as registering a template based on each domain, thereby improving recognition precision while ensuring a simple operation process.

In a possible implementation of the fifth aspect, the server is further configured to: obtain second template image information from the pre-stored template image information, where the second template image information and the first image information belong to a same domain; and obtain the first template image information from the pre-stored template image information when the second template image information does not match the first image information.

In a possible implementation of the fifth aspect, the template collection apparatus is further configured to send collected second image information; and the server is further configured to receive the second image information from the template collection apparatus. The server is further configured to obtain second template image information from the pre-stored template image information, where the second template image information and the second image information belong to a same domain. The server is further configured to update the pre-stored template image information based on the second image information when the second image information matches the second template image information, and a registration time of the second template image information exceeds a time threshold, or when a matching degree between the second image information and the second template image information is greater than a first threshold and less than a second threshold.

In a possible implementation of the fifth aspect, when a matching degree between the first image information and the first template image information is greater than a third threshold, the first image information matches the first template image information. When the matching degree between the second image information and the second template image information is greater than a fourth threshold, the second image information matches the second template image information. The third threshold is different from the fourth threshold.

In a possible implementation of the fifth aspect, the template collection apparatus is further configured to send collected third image information; and the server is further configured to receive the third image information from the template collection apparatus. The server is further configured to obtain third template image information from the pre-stored template image information, where the third template image information and the third image information belong to different domains, and the third template image information and the first template image information belong to different domains. The server is further configured to update the pre-stored template image information based on the third image information when the third image information matches the third template image information, where when a matching degree between the third image information and the third template image information is greater than the third threshold, the third image information matches the third template image information.

According to a sixth aspect, a template collection system is provided, where the template collection system includes a template collection apparatus and a server. The template collection apparatus is configured to send collected first image information. The server is configured to receive the first image information from the template collection apparatus. The server is further configured to obtain first template image information from pre-stored template image information, where the first template image information and the first image information belong to different domains. The server is further configured to send the first template image information. The template collection apparatus is further configured to receive the first template image information from the server. The template collection apparatus is further configured to send indication information to the server based on the first image information when the first image information matches the first template image information, where the indication information is used to indicate the server to update the pre-stored template image information. The indication information may include template image information generated based on the first image information, and information indicating an updating manner. The updating manner includes adding the generated template image information or replacing the first template image information with the generated template image information.

By using the template collection system in the sixth aspect, a facial template of a domain in which a user does not register a template can be automatically collected, and the user does not need to perform a complex operation such as registering a template based on each domain, thereby improving recognition precision while ensuring a simple operation process.

In a possible implementation of the sixth aspect, the template collection apparatus is further configured to send collected second image information; and the server is further configured to receive the second image information from the template collection apparatus. The server is further configured to obtain second template image information from the pre-stored template image information, where the second template image information and the second image information belong to a same domain. The server is further configured to send the second template image information. The template collection apparatus is further configured to receive the second template image information from the server. The template collection apparatus is further configured to send indication information to the server based on the second image information when the second image information matches the second template image information, and a registration time of the second template image information exceeds a time threshold, or when a matching degree between the second image information and the second template image information is greater than a first threshold and less than a second threshold, where the indication information is used to indicate the server to update the pre-stored template image information. The indication information may include template image information generated based on the second image information, and information indicating an updating manner. The updating manner includes adding the generated template image information or replacing the second template image information with the generated template image information.

In a possible implementation of the sixth aspect, when a matching degree between the first image information and the first template image information is greater than a third threshold, the first image information matches the first template image information. When the matching degree between the second image information and the second template image information is greater than a fourth threshold, the second image information matches the second template image information. The third threshold is different from the fourth threshold.

In a possible implementation of the sixth aspect, the template collection apparatus is further configured to send collected third image information; and the server is further configured to receive the third image information from the template collection apparatus. The server is further configured to obtain third template image information from the pre-stored template image information, where the third template image information and the third image information belong to different domains, and the third template image information and the first template image information belong to different domains. The server is further configured to send the third template image information. The template collection apparatus is further configured to receive the third template image information from the server. The template collection apparatus is further configured to send indication information based on the third image information to the server when the third image information matches the third template image information, where the indication information is used to indicate the server to update the pre-stored template image information. When a matching degree between the third image information and the third template image information is greater than the third threshold, the third image information matches the third template image information.

According to a seventh aspect, an electronic apparatus is provided, where the electronic apparatus includes a processor and a memory, the memory stores program instructions, and when the program instructions are executed by the processor, the processor is enabled to perform the technical solution provided in any one of the first aspect to the third aspect or any one of the possible implementations.

According to an eighth aspect, an electronic apparatus is provided, where the electronic apparatus includes a processor and an interface circuit, the processor is coupled to a memory by using the interface circuit, and the processor is configured to execute program code in the memory, so that the processor performs the technical solution provided in any one of the first aspect to the third aspect or any one of the possible implementations.

According to a ninth aspect, a computer storage medium is provided. The computer storage medium includes computer instructions. When the computer instructions are run on an electronic device, the electronic device is enabled to perform the technical solutions provided in any one of the first aspect to the third aspect or any one of the possible implementations.

According to a tenth aspect, a computer product is provided. When the computer program product runs on a computer, the computer is enabled to perform the technical solutions provided in any one of the first aspect to the third aspect or any one of the possible implementations.

**BRIEF DESCRIPTION OF DRAWINGS**

The following further describes features of the present invention and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in this specification, content referred to by same reference signs is also the same. The specific accompanying drawings are described as follows:

FIG. 1 is a schematic flowchart of a template collection method according to an embodiment of this application;
FIG. 2 is a schematic flowchart of a template collection method according to an embodiment of this application;
FIG. 3 is a schematic flowchart of a template collection method according to an embodiment of this application;
FIG. 4 is a schematic diagram of a structure of a facial recognition system according to an embodiment of this application;
FIG. 5 is a schematic diagram of an application scenario according to an embodiment of this application;
FIG. 6A and FIG. 6B are a schematic flowchart of a template collection method according to an embodiment of this application;
FIG. 7 is a schematic flowchart of template registration/updating processing according to an embodiment of this application;
FIG. 8 is a schematic flowchart of actively initiating template registration by a user according to an embodiment of this application;
FIG. 9 is a schematic flowchart of a template collection method according to an embodiment of this application;
FIG. 10 is a schematic diagram of a structure of a template collection apparatus according to an embodiment of this application;
FIG. 11 is a schematic diagram of a structure of a template collection system according to an embodiment of this application;
FIG. 12 is a schematic diagram of a structure of a template collection system according to an embodiment of this application;
FIG. 13 is a schematic diagram of a structure of a computing apparatus according to an embodiment of this application; and
FIG. 14 is a schematic diagram of a structure of a computing apparatus according to an embodiment of this application.

**DESCRIPTION OF EMBODIMENTS**

A template collection method in this application may be applied to a biometric recognition technology, and an object may include various objects, faces, animals, and the like. However, the method is not limited thereto. For example, the method may be further used for recognition of various objects.

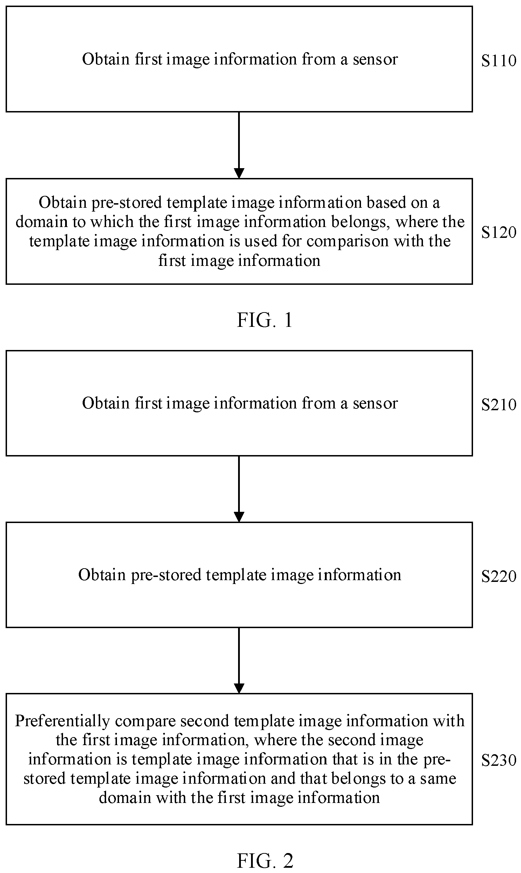

FIG. 1 is a schematic flowchart of a template collection method according to an embodiment of this application. It should be understood that the template collection method may be performed by a computing apparatus or an electronic device (for example, a terminal), or may be performed by a chip or a system on chip (system on chip, SoC) in an electronic device. As shown in FIG. 1, the template collection method includes the following steps.

S 110: Obtain first image information from a sensor. The sensor may include a camera and a radar. The radar may include a lidar, a millimeter wave radar, and an ultrasonic radar. The first image information may be RGB (Red-Green-Blue, red-green-blue) image information, grayscale image information, IR (infrared, infrared) image information, or point cloud image information from the radar. The first image information may be an image obtained by the sensor, or may be information that is extracted from the image and that includes a partial image of a target object, a feature vector, a number that represents a feature of a target object, or the like.

S 120: Obtain pre-stored template image information based on a domain to which the first image information belongs, where the template image information is used for comparison with the first image information. The domain herein may be divided based on an attribute, for example, a format, a color, or a source of the image collected by the sensor. That is, the domain to which the first image information belongs is used to indicate one or more features of the format, the color, or the source of the image collected by the sensor. In different domain division manners, a domain to which the image information from the radar belongs may be different from a domain to which the image information from the camera belongs. Alternatively, a domain to which RGB image information from the camera belongs may be different from a domain to which IR image information from the camera belongs. When there are a plurality of cameras, a domain to which image information from one camera belongs may be different from a domain to which image information from another camera belongs. The pre-stored template image information is obtained based on the domain to which the first image information belongs, so that appropriate pre-stored template image information can be selected for comparison with the first image information, to reduce impact of a difference between domains to which the first image information and the pre-stored template image information belong on recognition precision and improve recognition precision.

The pre-stored template image information may be template image information stored locally or in a cloud, or a combination of local storage and cloud storage may be used. The pre-stored template image information may be stored in a database, a queue, a table, or the like. Local storage may be understood as storage in a local memory. The memory includes a non-volatile memory and a volatile memory. The non-volatile memory has a large storage capacity, but signaling interaction can be reduced. Storing the pre-stored template image information in the volatile memory can reduce storage costs.

In some embodiments, second template image information may be preferentially obtained for comparison with the first image information, where the second template image information is pre-stored same-domain template image information of the first image information. When there is no second template image information, the first template image information is obtained for comparison with the first image information, where the first template image information is pre-stored cross-domain template image information of the first image information. Being same-domain means belonging to a same domain. Being cross-domain means belonging to different domains. Usually, for a same target object, a difference between features extracted from two same-domain images is less than a difference between features extracted from two cross-domain images. Therefore, in a case of same-domain comparison, feature comparison can be more accurately performed, and a rejection rate can be reduced. Therefore, the pre-stored same-domain template image information is preferentially obtained for comparison with the first image information, so that recognition precision can be ensured.

In some embodiments, a category of a target object included in the first image information may be first recognized, and template image information that is in the pre-stored template image information and that includes a target object of the same category is obtained based on the domain to which the first image information belongs. The category of the target object may be determined based on an identity, an attribute, or a feature of the target object. The category of the target object may include one or more of a person, an animal, an object, a male, a female, an adult, or a child. In this case, the pre-stored template image information may be information separately stored based on the category. Therefore, when a quantity of pieces of pre-stored template image information is large, preliminary screening can be performed by first recognizing the category of the target object, and then the target object is compared with pre-stored template image information that is screened out one by one, thereby reducing a computation amount during image information comparison and ensuring real-time performance.

Optionally, the template collection method further includes the following step.

S 130: Compare the first image information with the obtained pre-stored template image information, where authentication succeeds when the first image information matches the obtained pre-stored template image information. The target object included in the first image information may be first determined, and then the target object included in the first image information is compared with the target object included in the obtained template image information. When a similarity is greater than a specified threshold, the first image information matches the obtained template image information. The similarity between the two target objects may be determined by comparing a feature point of the target object included in the first image information with a feature point of the target object included in the obtained template image information. All feature points may be compared, or only one or more feature points may be compared. For example, when the target object is a face, full face comparison may be performed, or one or more of an eye, a nose, a mouth, a pupil, and an iris may be compared.

Optionally, the template collection method further includes the following step.

S 140: Update the pre-stored template image information based on the first image information when the first image information is compared with the obtained first template image information, and authentication succeeds. The updating may be adding template image information generated based on the first image information. By adding the template image information, image information of various templates in different domains may be obtained. This improves flexibility of comparing collected image information. Updating may alternatively be replacing the template image information used when authentication succeeds. Storage costs are reduced by replacing the template image information.

Optionally, the template collection method further includes the following step.

S 150: When authentication fails, send prompt information to a user, where the prompt information is used to prompt the user to register a template. The prompt information may be sent to the user when the user fails to be authenticated by using the first image information but is authenticated in another manner. The another manner includes one or more of a password, a verification code, a fingerprint, a voiceprint, or an iris. Therefore, when the user choose to register a template, authentication does not need to be performed in another manner, for example, a password, each time, thereby reducing a user operation process.

FIG. 2 is a schematic flowchart of a template collection method according to an embodiment of this application. It should be understood that the template collection method may be performed by a computing apparatus or an electronic device (for example, a terminal), or may be performed by a chip or a system on chip in an electronic device. As shown in FIG. 2, the template collection method includes the following steps.

S210: Obtain first image information from a sensor.

S220: Obtain pre-stored template image information.

S230: Preferentially compare second template image information with the first image information, where the second image information is template image information that is in the pre-stored template image information and that belongs to a same domain with the first image information. When there is no second template image information in the pre-stored template image information, the first template image information is compared with first image information, where the first template image information is template image information that is in the pre-stored template image information and that belongs to a different domain from the first image information. Recognition precision can be ensured by preferentially comparing the second template image information and the first image information in the same domain.

Optionally, the template collection method further includes S240 and S250. For details about S240 and S250, refer to S140 and S 150 in FIG. 1.

It should be understood that, for related technical details in the template collection method shown in FIG. 2, refer to related descriptions in the template collection method shown in FIG. 1. Details are not described herein again.

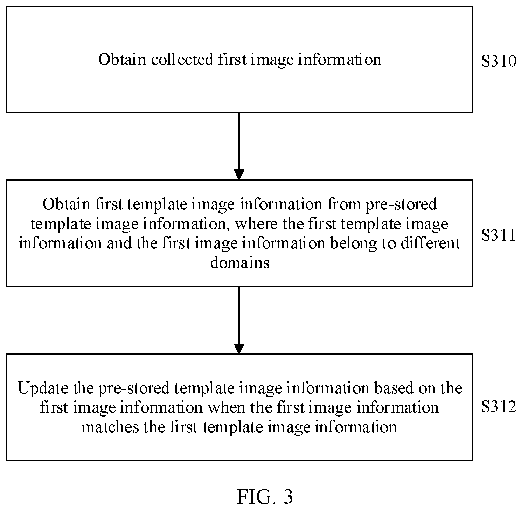

FIG. 3 is a schematic flowchart of a template collection method according to an embodiment of this application. It should be understood that the template collection method may be performed by a computing apparatus or an electronic device (for example, a terminal), or may be performed by a chip or a system on chip in an electronic device. As shown in FIG. 3, the template collection method includes the following steps.

S310: Obtain collected first image information. The first image information may be from a sensor. The sensor may be a camera or a radar.

S311: Obtain first template image information from pre-stored template image information, where the first template image information and the first image information belong to different domains. The domain is used to indicate one or more features of a format, a color, or a source of image information. The domain may include an RGB domain and an IR domain. An image that is collected in a visible light band and records color information may belong to the RGB domain. Specifically, for example, an RGB image may belong to the RGB domain. An image that is collected in an infrared band and does not record color information may belong to the IR domain. The domain may further include a grayscale domain. An image that is collected in a visible light band and does not record color information may belong to the grayscale domain.

In some embodiments, S311 may include: obtaining second template image information from the pre-stored template image information, where the second template image information and the first image information belong to a same domain; and obtaining the first template image information from the pre-stored template image information when the second template image information does not match the first image information.

S312: Update the pre-stored template image information based on the first image information when the first image information matches the first template image information. Updating may include adding template image information and replacing original template image information.

Optionally, the template collection method further includes the following steps.

S313: Obtain collected second image information. The second image information may be from a sensor. A source of the second image information may be the same as or different from a source of the first image information. That is, the sensor that collects the second image information may be the same as or different from the sensor that collects the first image information.

S314: Obtain second template image information from the pre-stored template image information, where the second template image information and the second image information belong to a same domain.

S315: Update the pre-stored template image information based on the second image information when the second image information matches the second template image information, and a registration time of the second template image information exceeds a time threshold. When the registration time of the template image information exceeds the time threshold, a feature of a target object included in the template image information may have changed slightly compared with the original feature. By updating the pre-stored template image information, a rejection rate can be reduced, and recognition precision can be improved.

It should be understood that S313 to S315 may be performed before S310, or may be performed after S311.

In some embodiments, instead of S315, the template collection method includes the following step.

S315c: Update the pre-stored template image information based on the second image information when a matching degree between the second image information and the second template image information is greater than a first threshold and less than a second threshold. When the matching degree is greater than the first threshold and less than the second threshold, although authentication succeeds, the matching degree is low, indicating that the feature of the recognized target object may have changed slightly compared with the original feature. By updating the pre-stored template image information, a rejection rate can be reduced, and recognition precision can be improved.

Optionally, the template collection method further includes the following steps.

S316: Obtain second image information from a sensor, where the second image information includes a plurality of pieces of image information. The plurality of pieces of image information may be image information continuously collected within a specific time period.

S317: Obtain pre-stored second template image information, where the second template image information and the second image information belong to a same domain.

S318: Update the pre-stored template image information based on the second image information when the second image information does not match the second template image information, a user is authenticated in another authentication manner, and a quantity of times of successful authentication in the another authentication manner exceeds a specified threshold. In this case, the pre-stored template image information is updated by adding new template image information. When the user is authenticated in the another authentication manner for a plurality of times, the pre-stored template image information is directly updated without obtaining consent of the user. Therefore, system security is ensured and operation processes of the user are reduced.

In some embodiments, when a matching degree between the first image information and the first template image information is greater than a third threshold, the first image information matches the first template image information; and the second image information matches the second template image information when the matching degree between the second image information and the second template image information is greater than a fourth threshold, where the third threshold is different from the fourth threshold.

Optionally, the template collection method further includes the following steps.

S319: Obtain collected third image information. A source of the third image information may be the same as or different from the source of the first image information and the source of the second image information. That is, a sensor that collects the third image information may be the same as or different from the sensor that collects the first image information and the sensor that collects the second image information.

S320: Obtain third template image information from the pre-stored template image information, where the third template image information and the third image information belong to different domains, and the third template image information and the first template image information belong to different domains.

S321: Update the pre-stored template image information based on the third image information when the third image information matches the third template image information, where when a matching degree between the third image information and the third template image information is greater than the third threshold, the third image information matches the third template image information. When image information collected in any two domains in a plurality of domains is compared with the pre-stored template image information, a same threshold, namely, the third threshold, is used. Therefore, even if a quantity of domains increases or changes, only a threshold needs to be reselected, and an algorithm does not need to be retrained, thereby ensuring that the algorithm can be used for a long time.

Optionally, the template collection method further includes the following steps.

S322: Send prompt information to the user, where the prompt information is used to request the user to agree to update the pre-stored template image information, or notify the user that the pre-stored template image information is updated. The template image information can be updated more accurately by requesting the user to agree to update the template image information. The user is notified that the template image information is updated, so that a right to know of the user is ensured.

It should be understood that, for related technical details in the template collection method shown in FIG. 3, refer to related descriptions in the template collection method shown in FIG. 1 and FIG. 2. Details are not described herein again.

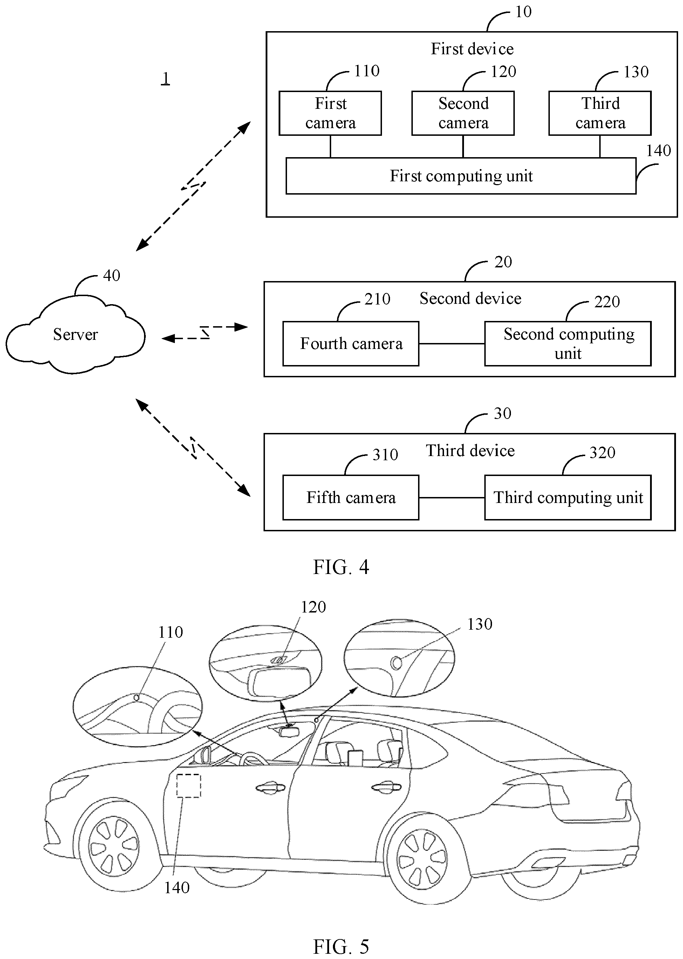

Refer to FIG. 4 to FIG. 10. The following describes in detail a template collection method provided in an embodiment of this application by using an example in which the template collection method is applied to facial recognition.

Generally, facial recognition applications are classified into verification applications and retrieval applications. The following uses a verification application of facial recognition as an example for description. The verification application of facial recognition is mainly used to verify an identity of an object, and grant a corresponding permission. In this application, the verification application is sometimes referred to as facial verification.

Core steps of a mainstream facial recognition algorithm are feature extraction, feature comparison, and result output. The feature is usually a multi-dimensional vector. A feature extracted from a collected facial image is called a recognition feature, and a feature vector of a pre-stored template image used for comparison with the facial image is also called a template feature. In facial verification, the recognition feature and the template feature are usually compared by calculating a similarity. A higher similarity indicates that the two features are closer. Usually, a similarity threshold is selected. When the similarity between the two features is greater than the similarity threshold, faces corresponding to the two features belong to a same person, and facial verification is successful.

During facial verification, the facial image and the template image may belong to different domains, that is, facial verification is performed across domains. The domain herein may be divided, for example, based on any information related to an image, that is, image-related information. Images in a same domain have at least one piece of same image-related information. Specifically, the domain to which the image belongs may be divided based on attribute information of the image. Attributes of the image may include a photographing time, brightness, a color, a format, a source, and the like. An RGB image, a grayscale image, and an IR image may belong to different domains. An image from a radar and an image from a camera may belong to different domains. Images from different cameras may belong to different domains. If the facial image and the template image are cross-domain, facial recognition precision decreases because features extracted from the images in different domains are different.

Herein, it should be noted in advance that the domain division method described above is merely an example, and is not intended to limit this application. Actually, there is no unified and quantitative standard for cross-domain determination in the industry. This is not strictly limited in this application either. If one of the following descriptions is met, it may be considered that two different types of images are cross-domain, and the method provided in this application can be used.

(1) When the facial image and the template image belong to a same type, the facial recognition precision is high. When the facial image and the template image belong to different types, the facial recognition precision is obviously reduced.
(2) In implementation of the facial recognition algorithm, different templates are used for different types of facial images, and corresponding similarity thresholds are different.
(3) In implementation of the facial recognition algorithm, an algorithm is trained for a capability of recognizing different types of facial images and processing different types of facial images in different ways.

(1) In implementation of the facial recognition algorithm, different processing is performed on the facial image and the template image that belong to the same type or different types.

Specifically, for example, in facial recognition applied to an intelligent vehicle, cross-domain images may be generated in the following cases:

(1) There are a plurality of cameras inside and outside the intelligent vehicle, and these cameras are different in terms of installation positions, types, and the like.
(2) An IR-CUT (infrared-cut, infrared-cut) camera is used. This type of camera collects a color image when light is sufficient, and collects an IR image when light is weak. Therefore, images collected at different moments may be cross-domain.
(3) A color image is used to register a facial template on a mobile phone, and an IR image is used on an in-vehicle terminal to perform facial recognition.

In addition, when a same account is logged in to on a plurality of devices (such as an intelligent vehicle, a mobile phone, a tablet computer, a notebook computer, and a smart watch), unified facial recognition based on the plurality of devices also involves a cross-domain problem.

The following describes an application scenario of this embodiment of this application.

The template collection method provided in this embodiment of this application may be applied to a facial recognition system including one or more devices.

FIG. 4 is a schematic diagram of a structure of a facial recognition system 1 according to an embodiment of this application. As shown in FIG. 1, the facial recognition system 1 includes a first device 10. The first device 10 has a first camera 110, a second camera 120, a third camera 130, and a first computing unit 140. The first camera 110, the second camera 120, and the third camera 130 are connected to the first computing unit 140 by using a wired cable or wireless communication. FIG. 1 is merely an example. A quantity of cameras of the first device 10 is not limited to three, and may be one, two, or more.

Optionally, the facial recognition system 1 includes a second device 20. The second device 20 has a fourth camera 210 and a second computing unit 220. A quantity of cameras of the second device 20 is not limited to one, and may be more than two.

Optionally, the facial recognition system 1 includes a third device 30. The third device 30 has a fifth camera 310 and a third computing unit 320. A quantity of cameras of the third device 30 is not limited to one, and may be more than two.

The first device 10, the second device 20, and the third device 30 may be, for example, an intelligent vehicle, a mobile phone, a tablet computer, a notebook computer, a smart watch, or a smart home terminal such as a smart doorbell or a smart sound box. It should be noted that FIG. 1 is merely an example, and a quantity of devices included in the facial recognition system 1 is not limited to three, and may be one, two, or more. Each device may have a storage unit for pre-storing a template image.

Optionally, the facial recognition system 1 includes a server 40. The first device 10, the second device 20, and the third device 30 are separately in communication connection with the server 40. The server 40 may be a physical server, a virtual server, or a cloud server. The server 40 may be configured to pre-store a template image, or store registration information online. Optionally, the server 40 may further perform some or all of feature extraction, facial template registration, or facial recognition.

Optionally, each camera in the facial recognition system 1 has one or more states. For example, when an IR-CUT camera is used, the IR-CUT camera has two states: collecting a color image and collecting an IR image.

Each camera in the facial recognition system 1 is configured to collect a facial image and/or a facial template registration image. Each computing unit is configured to: process an image, extract a feature, register a facial template, and perform facial recognition. Each device can perform operations such as unlocking, account login, and payment based on a facial recognition result.

The facial recognition system 1 allows facial template registration and facial recognition for all devices, cameras, and cameras in all states, or allows facial template registration and facial recognition for some devices, cameras, and cameras in some states. The devices, cameras, and cameras in some states that are allowed for recognition include devices, cameras, and states that are allowed for registration.

According to the facial recognition system 1 shown in FIG. 4, for example, the following three specific application scenarios may be assumed.

In a first application scenario, the facial recognition system 1 includes only the first device 10, and the first device 10 is an intelligent vehicle. FIG. 5 is a schematic diagram of a first application scenario. As shown in FIG. 5, the first camera 110, the second camera 120, and the third camera 130 are cameras installed inside and outside a cockpit, and the first computing unit 140 is, for example, an intelligent cockpit domain controller (CDC, Cockpit Domain Controller). The first camera 110 is, for example, an IR camera installed behind a steering wheel, and is mainly used for driver monitoring and facial recognition. In addition, the first camera 110 may alternatively be installed below an A-column or at the top of a dashboard, or the like. The second camera 120 is, for example, an IR-CUT camera installed near a primary rearview mirror, and is mainly used for cockpit monitoring and facial recognition. The third camera 130 is, for example, an IR camera installed above a vehicle door outside the cockpit, and is configured to implement a function of getting on the vehicle after facial recognition unlocking. In addition, the third camera 130 may alternatively be installed at a position above the A-column or a B-column outside the cockpit. A user may use any one of the first camera 110, the second camera 120, and the third camera 130 to register a facial template and any one of the first camera 110, the second camera 120, and the third camera 130 to perform facial recognition. In addition, the first camera 110 and the second camera 120 in the cockpit may further perform facial recognition at the same time, to perform mutual verification, thereby enhancing security.

In a second application scenario, the facial recognition system 1 includes the first device 10 and the second device 20, the first device 10 is an intelligent vehicle, and the second device 20 is a mobile phone. In this scenario, based on a configuration and a function of the first application scenario, the user may further perform facial template registration and/or facial recognition by using the second device 20. The second computing unit 220 is, for example, a central processing unit (CPU, Central Processing Unit) of the mobile phone.

In a third application scenario, the facial recognition system includes a plurality of devices such as the first device 10, the second device 20, and the third device 30. In this scenario, devices such as the first device 10, the second device 20, and the third device 30 are, for example, an intelligent vehicle, a mobile phone, a tablet computer, a notebook computer, a smart watch, or a smart home terminal such as a smart doorbell or a smart sound box. Computing units such as the first computing unit 140, the second computing unit 220, and the third computing unit 320 may be, for example, an intelligent cockpit domain controller, a central processing unit, and a microcontroller unit (MCU, Microcontroller Unit). The user can register a facial template on all or some devices.

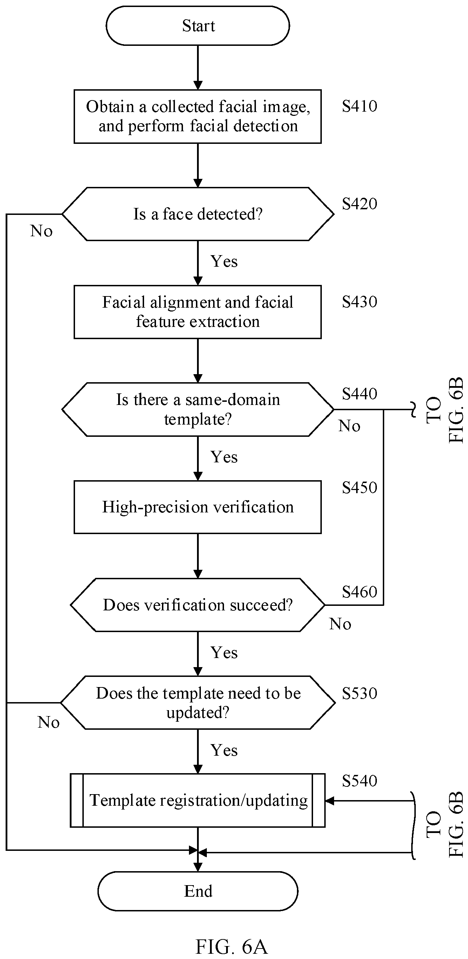

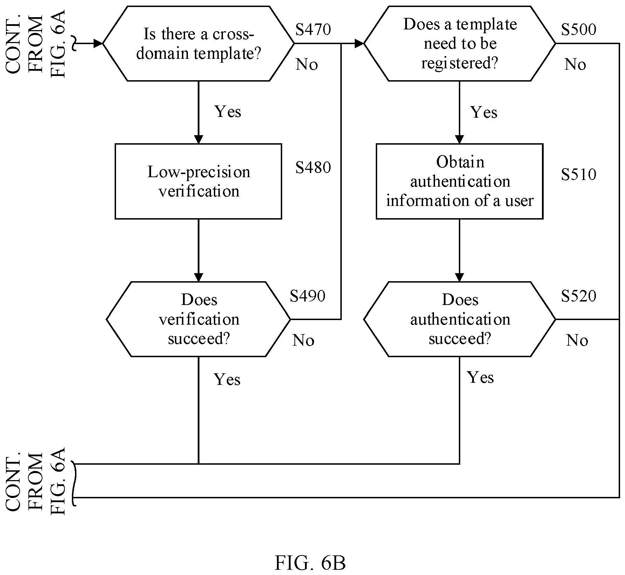

FIG. 6A and FIG. 6B are a schematic flowchart of a facial template collection method according to an embodiment of this application. For example, when a user attempts to perform a behavior such as account login, payment, screen unlocking, or vehicle door unlocking through facial verification, and a camera photographs a facial image and sends the facial image to a computing unit, processing shown in the flowchart in FIG. 6A and FIG. 6B is performed.

The following describes the steps in FIG. 6A and FIG. 6B in sequence.

S410: Obtain a facial image collected by the camera, and perform facial detection. After the facial image is obtained, an area in which a face is located is determined, and an image of the area is extracted. In this case, facial detection may be performed by using a method such as deep learning. The facial image obtained in step S410 is equivalent to an example of "first image information", "second image information", and "third image information" in this application.

S420: Determine whether a face is detected in the facial image. According to a facial detection result in S410, if a face is detected, S430 is performed. If no face is detected, the process ends.

S430: Align the face, and extract a feature. The face is restored to a proper orientation and angle based on the extracted image of the area in which the face is located. For example, facial alignment may be performed by using a key point matching method. First, a facial key point is extracted by using a method such as deep learning, and then an affine transformation matrix is calculated based on the extracted key point and a standard key point, and facial alignment is implemented through affine transformation. Feature extraction is performed based on the aligned face to obtain a recognition feature.

S440: Determine whether there is a facial template in a same domain with the collected facial image. If there is the facial template in the same domain with the collected facial image, S450 is performed; otherwise, S470 is performed.

The collected or registered facial template information is pre-stored facial template information, for example, may be stored in a storage unit of each device. The pre-stored facial template information may be stored in a form of a database, a queue, or a table. The pre-stored facial template information may be separately stored based on a domain to which the facial template information belongs and/or a face category. The face category can be classified by gender and age. The face category may include a male, a female, an adult, and a child. The facial template information includes information about template content and information about the domain to which the facial template belongs. Whether there is a facial template that is in the same domain with the facial image is determined based on a domain to which the facial image belongs. The pre-stored facial template information is equivalent to an example of "pre-stored template image information" in this application.

The domain to which the facial image belongs and the domain to which the facial template belongs can be defined based on one or more features of a format, a color, or a source of the image. When being divided based on the color of the image, the domain may include, for example, an RGB domain and an IR domain. An image that is collected in a visible light band and records color information may belong to the RGB domain. An image that is collected in an infrared band and does not record color information may belong to the IR domain. When an image from the camera is an RGB image, a domain to which the image and a facial template generated based on the image belong is the RGB domain. When the image from the camera is an IR image, a domain to which the image and a template image information generated based on the image belong is the IR domain. When division is implemented based on the source of the image, images of a same type from a same camera or a same type of camera may belong to a same domain. Specifically, for example, the second camera 120 of the first device 10 in FIG. 4 is an IR-CUT camera, and it may be defined as: All color images photographed by the second camera 120 belong to a same domain, all IR images photographed by the second camera 120 belong to a same domain, and the color images photographed by the second camera 120 belong to a different domain from the IR images photographed by the second camera 120. Alternatively, it may be defined as: An image photographed by the first camera 110 and an image photographed by the third camera 130 belong to different domains.

During facial recognition and facial template registration, a domain to which an image belongs is determined during image collection and cannot be changed. A domain to which a facial template belongs is the same as the domain to which the image that generates the template belongs and cannot be changed.

The domain to which the image belongs and the domain to which the facial template belongs can be determined by using external information. When a facial template is saved, a domain to which the facial template belongs is marked, which can be reflected in a file name and a file storage location, or template information and template content may be packed into a dictionary. A video stream from the camera includes source information, which can be used to determine the domain to which the image belongs.

The domain to which the image belongs may also be determined by using a coding feature. After the video stream is decoded, an RGB-domain image usually has three different channels, and an IR-domain image has only one channel or three same channels. Alternatively, determination may be directly performed on an encoded video stream. A YUV (Luminance-Bandwidth-Chrominance, luminance-bandwidth-chrominance) color encoding format is used as an example. Values of a U channel and a V channel of the RGB-domain image are different in different positions, and values of a U channel and a V channel of the IR-domain image are the same in all positions.

A domain of a vectorized facial template can be determined only based on external information. A domain of the video stream may be determined based on external information or a coding feature, but the external information is preferably used for determining.

S450: Perform high-precision verification. That is, a same-domain template and a same-domain threshold are used for feature comparison. The same-domain template is a facial template that belongs to the same domain with the collected facial image. The same-domain threshold is a similarity threshold used to determine whether two facial features belong to a same person when feature comparison is performed between a facial image and the same-domain template. The same-domain template is equivalent to an example of "second template image information" in this application. The same-domain threshold is equivalent to an example of the "fourth threshold" in this application. Specifically, a similarity between a template feature and a recognition feature of the same-domain template may be calculated, and the calculated similarity is compared with the same-domain threshold. In this embodiment, a similarity of facial features (face similarity) may be evaluated by using indicators such as a Euclidean distance and a cosine similarity. A manner of selecting the same-domain threshold is described below. S460 is performed after S450. When a quantity of facial templates included in the pre-stored facial template information is small, the facial image may be compared with all same-domain templates one by one. If there are a large quantity of facial templates, primary screening can be performed first. For example, it may be first determined whether the face in the facial image is male or female, or is an adult or a child. For example, in the case of a male, male facial templates in the pre-stored facial template information may be first screened out, and then the facial image is compared with all same-domain templates in the male facial templates one by one.

S460: Determine whether high-precision verification succeeds. Based on a feature comparison result in S450, when the similarity between the template feature and the recognition feature extracted from the facial image is greater than the same-domain threshold, high-precision verification succeeds. If verification succeeds, S530 is performed; otherwise, S470 is performed.

S470: Determine whether there is a facial template that is cross-domain (in a different domain) with the collected facial image. The same method may be used for determining, and details are not described herein again. If there is the facial template that is cross-domain with (in a different domain from) the collected facial image, S480 is performed; otherwise, S500 is performed.

S480: Perform low-precision verification. That is, a cross-domain template and a cross-domain threshold are used for feature comparison. The cross-domain template is a facial template that belongs to a different domain from the collected facial image. The cross-domain threshold is a similarity threshold used to determine whether two facial features belong to a same person when feature comparison is performed between a facial image and the cross-domain template. The cross-domain template is equivalent to an example of "first template image information" in this application. The cross-domain threshold is equivalent to an example of "third threshold" in this application. Specifically, a similarity between a template feature and a recognition feature of the cross-domain template may be calculated, and the calculated similarity is compared with the cross-domain threshold. S490 is performed after S480. In this step, primary screening may also be performed as described above.

As described above, in S450 and S480, feature comparison is performed by using different facial templates and similarity thresholds. In this embodiment, the same-domain threshold and the cross-domain threshold may be selected in the following manner.

(1) A facial recognition algorithm is tested on a representative test set to output a similarity between the same face and different faces.
(2) A false acceptance rate (FAR: false acceptance rate) of facial recognition is determined based on a security requirement.
(3) A similarity threshold is selected based on the false acceptance rate and a test result of a similarity between the different faces.
(4) At least two similarity thresholds, namely, a same-domain threshold and a cross-domain threshold are specified.
(5) For the same-domain threshold, each domain may use a separate threshold, or several domains or all domains may share a same threshold.
(6) For a same-domain threshold shared by a plurality of domains, a domain with a highest false acceptance rate should meet the requirement. Therefore, a minimum value of thresholds corresponding to the domains in a specified false acceptance rate needs to be selected.
(7) For the cross-domain threshold, every two domains may use a separate threshold, or several domains or all domains may share a same threshold. It is recommended that all domains use a same threshold.
(8) For a cross-domain threshold shared by a plurality of domains, a threshold may be calculated for every two domains separately and a domain with a minimum value is selected. Alternatively, a plurality of domains may be combined in a specified proportion during the test.
(9) When security requirements are the same, a false acceptance rate corresponding to the cross-domain threshold should not be higher than a false acceptance rate corresponding to the same-domain threshold.

In the foregoing threshold selection manner, when a plurality of domains share a same cross-domain threshold, an upper limit of a false acceptance rate corresponding to the cross-domain threshold is not higher than a value of a false acceptance rate corresponding to the same-domain threshold or an upper limit thereof. In addition, generally, a value of the same-domain threshold selected in the foregoing manner is greater than a value of the cross-domain threshold, but a case other than this is not excluded.

In addition, the facial recognition algorithm in (1) may be an algorithm trained by using a single-domain sample, or may be an algorithm trained by using a multi-domain sample. This is not particularly limited in this embodiment of this application. If all image samples of a used domain can participate in training, precision of the algorithm can be improved. For example, algorithm code of a base version may be first trained in one or more most commonly used domains, and then fine-tuning is performed by using a small amount of data in another domain. For example, the algorithm code of the base version may be first trained in an RGB domain.

S490: Determine whether low-precision verification succeeds. Based on a comparison result in S480, when the similarity between the template feature and the recognition feature is greater than the cross-domain threshold, low-precision verification succeeds. If verification succeeds, S540 is performed; otherwise, S500 is performed.

S500: Determine whether a template needs to be registered. Herein, the computing unit may output information used to ask the user whether the facial template needs to be registered, obtain reply information of the user, and determine, based on the reply information of the user, whether the template needs to be registered. For example, the computing unit may output information in a manner of a voice, display, or the like by using a speaker, a display, or the like of the device. For example, the computing unit may obtain operation input information of the user for the display or voice information of the user, and determine, based on the obtained information, whether the template needs to be registered. If it is determined that the template needs to be registered, S510 is performed; otherwise, the process ends.

S510: Obtain user authentication information. In this step, another authentication manner is used to authenticate a user right. The computing unit may obtain information that is entered by the user and that includes one or more of a password, a verification code, a fingerprint, a voiceprint, or an iris, to verify the user right.

S520: Determine whether the user is authenticated. If authentication succeeds, S540 is performed; otherwise, the process ends.

S530: Determine whether the template needs to be updated. If the template needs to be updated, S540 is performed; otherwise, the process ends.

Herein, information used to ask the user whether to update the template may be output, reply information entered by the user is obtained, and whether the template needs to be updated is determined based on the reply information of the user. Alternatively, a system can automatically update the template at a fixed interval or randomly update the template after a period of time. Alternatively, the system may automatically update the template or ask the user whether to update the template when recognition fails for a plurality of consecutive times or recognition succeeds but a similarity is less than a specific threshold. The reason for updating in the latter case is that this case indicates that a face of the user is greatly changed from a moment at which the template is collected.

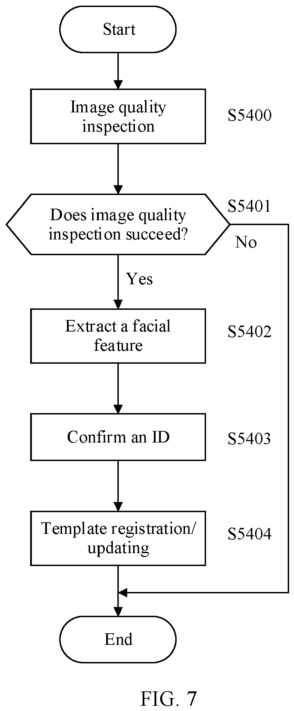

S540: Register or update the facial template. FIG. 7 is a sub-process of FIG. 6A and FIG. 6B, and is a specific schematic flowchart of facial template registration or updating processing in S540. The following describes the steps in FIG. 7.

S5400: Perform quality inspection on the facial image obtained in S410. Quality inspection includes two aspects: imaging quality inspection, including definition, contrast, and exposure, which can be implemented by hardware; and facial attribute inspection, such as a head posture and blocking, which can be implemented by using an algorithm such as deep learning. When the imaging quality is inspected, for example, a gradient threshold, a contrast threshold, and a brightness coefficient threshold may be set to determine whether definition, contrast, and exposure of an image meet a requirement, to check whether the imaging quality meets a requirement. When the facial attribute is inspected, for example, a deep learning model may be trained, for example, a model for calculating a head posture angle (Yaw: azimuth, Pitch: longitudinal angle, and Roll: transverse angle), and a model for determining whether a specific face area (such as a mouth, a nose, and an eye) is blocked, and a posture angle threshold and a blocking determining rule are set to check whether a face posture meets a requirement.

S5401: Determine whether quality inspection performed on the facial image succeeds. If the definition, contrast, and exposure of the image meet the requirement and the face posture meets the requirement, quality inspection performed on the facial image succeeds. If inspection succeeds, S1402 is performed; or if inspection fails, registration/updating fails, and the process ends.

S5402: Extract a facial feature from the image on which quality inspection succeeds. The facial feature has been calculated in the previous step S430, so that the facial feature may be directly used.

S5403: Determine, based on the previous facial recognition result, whether a corresponding ID (identification, account) is registered. If an ID is registered, the same ID is used. If no ID is registered, a new ID is allocated. Templates of a same user and of different domains have a same ID, and a domain to which the template belongs is marked.

For example, when S540 is performed after S530, it may be considered that a corresponding ID is registered, and an ID of the same-domain template used for high-precision verification in S450 is directly used. When S540 is performed after S490, it may be considered that a corresponding ID is registered, and an ID of the cross-domain template used for low-precision verification in S480 is directly used. When S540 is performed after S520, it may be considered that a corresponding ID is not registered, and a new ID is allocated.

S5404: Register or update the facial template.

When S540 is performed after S490, the facial template of the domain to which the facial image belongs is registered based on the facial image, that is, a new facial template is added. When S540 is performed after S520, a new ID is allocated to the user, and a facial template of the ID is registered based on the facial image. When S540 is performed after S530, the facial template is updated based on the facial image. In this case, the same-domain facial template is updated. For example, the original same-domain facial template can be replaced. After the processing in S5404, the pre-stored facial template information is changed compared with that before the processing. Therefore, it may also be understood that the pre-stored facial template information is updated through the processing. The processing in S5404 is equivalent to an example of "update the pre-stored template image information" in this application.

In addition, when updating the facial template, the existing template can be directly replaced with the new feature, or the new feature can be combined with the existing template in a summation manner. When the new feature and the existing template are combined, a moving average manner shown in the following formula (1) may be used.

$$V\_n=\alpha V\_i+(1-\alpha)\ V\_t \qquad\qquad (1)$$

In the formula, V_i is an input feature vector, V_t is an existing template vector, V_n is a new template vector, and $\alpha$ is a user-defined coefficient.

Optionally, different methods may be selected based on different updating trigger conditions. For example, if the user actively updates the template and the similarity is lower than a specified threshold (the threshold is not lower than the same-domain threshold for facial recognition), the template is directly replaced. In other cases, the new feature and the existing template are combined.

When a same ID corresponds to a plurality of templates (for example, a front face, a left face, and a right face) in a same domain, only a template corresponding to a collected facial image may be updated each time. For facial recognition across a plurality of domains, template features of some domains can be combined as template vectors dedicated for cross-domain recognition. During combination, the templates of the plurality of domains may be averaged, and a weighted average may be calculated based on a recognition frequency and importance of each domain.

In addition, considering a limited computing capability of the device, the image and the feature can be temporarily stored first. When a device load is light, the facial template can be registered or updated.

After S5404, the process ends. It should be noted that facial template registration or updating may fail. For example, a software error such as unqualified image quality inspection and write failure may cause a registration or updating failure. In this case, an updating or registration result (success or failure) may also be recorded before the process ends. If updating or registration fails, the system continues to use the existing template. If no same-domain template is available, the system attempts to automatically register the template when the user is recognized next time.

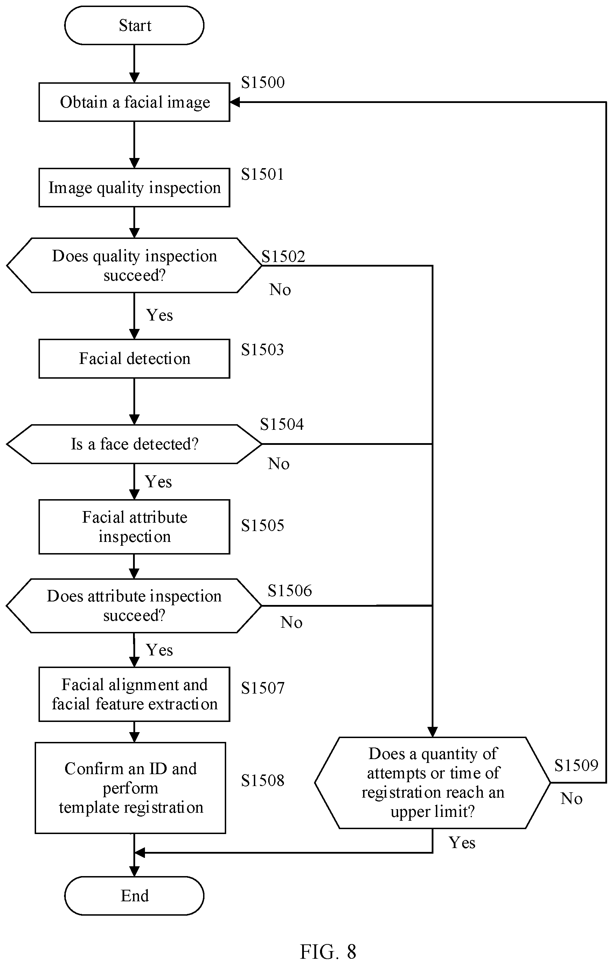

The foregoing describes a case in which the facial template is updated or registered in a facial recognition process. However, in this embodiment, the same-domain template or the cross-domain template in the foregoing description may also be a template obtained when the user actively initiates registration. FIG. 8 is a schematic flowchart of actively initiating template registration by a user according to an embodiment of this application. When the user triggers template registration, the computing unit performs authentication to verify a user right, and then registers a facial template according to the process in FIG. 8. The following describes the steps in FIG. 8.

S1500: Obtain a facial image collected by the camera.

S1501: Perform imaging quality inspection on the collected facial image. Similar to the foregoing, imaging quality inspection includes definition, contrast, exposure, and the like, and may be implemented by hardware.

S1502: Determine whether imaging quality inspection on the facial image succeeds. If inspection succeeds, S1503 is performed; if inspection fails, S1509 is performed.

S1503: Perform facial detection.

S1504: Determine whether a face is detected. If a face is detected, S1505 is performed; otherwise, S1509 is performed.

S1505: Perform facial attribution inspection. Similar to the foregoing, facial attribute inspection, for example, includes a head posture, blocking, and the like, and may be implemented by using an algorithm such as deep learning.

S 1506. Determine whether facial attribute inspection succeeds. If inspection succeeds, S 1507 is performed; if inspection fails, S1508 is performed.

S1507: Align the face, and extract a feature.

S1508: Confirm an ID to perform template registration.

Herein, the feature extracted from the facial image is compared with all existing template features to determine whether a corresponding ID is registered for the face. If a corresponding ID is registered for the face, the same ID is used; or if no ID is registered, a new ID is allocated. Templates of a same user but of different domains have a same ID. In addition, a domain to which the template belongs is marked when the template is saved. Then, the process ends.

Optionally, if the similarity between the feature extracted from the facial image and the same-domain template is higher than the same-domain threshold, it is considered that the same-domain template is registered. In this case, the user may be prompted to choose to replace, update, or retain the template.

Optionally, if the similarity between the feature extracted from the facial image and all cross-domain templates of a same ID is higher than the cross-domain threshold, it is considered that the corresponding ID is registered; or if the similarity between the extracted feature and all cross-domain templates of a same ID is not higher than the cross-domain threshold, it is considered that no corresponding ID is registered. If the similarity between some cross-domain templates with a same ID is higher than the cross-domain threshold, the user may be asked to check whether the user is the same person.

S1509: Determine whether a quantity of attempts or running time of the current registration reaches an upper limit. Herein, a total quantity of times that imaging quality inspection fails, no face is detected, and facial attribute inspection fails may be calculated as the quantity of attempts. Alternatively, elapsed time after the process of FIG. 8 starts is calculated as the running time. If the upper limit is reached, registration fails, and the process ends; otherwise, subsequent processing is performed repeatedly in S1500 until registration succeeds or the upper limit is reached.

According to this embodiment described above, facial verification is performed with reference to same-domain high-precision verification and cross-domain low-precision verification. When there is no same-domain template or same-domain high-precision verification fails, cross-domain low-precision verification is automatically performed, and when cross-domain low-precision verification succeeds, the facial template of the corresponding domain is automatically registered based on the facial image. Therefore, a facial template of a domain in which the user has not registered a template can be automatically collected, and the user does not need to perform a complex operation such as registering a template based on each domain. Compared with a case in which the user is required to register a plurality of different templates for different types of images, an operation process is simple, and user experience is improved. In addition, compared with a case in which only one type of template needs to be registered, but different thresholds are used for recognizing different types of images, recognition precision can be improved. Therefore, according to the template collection method in this embodiment of this application, recognition precision can be improved while a simple operation process is ensured.

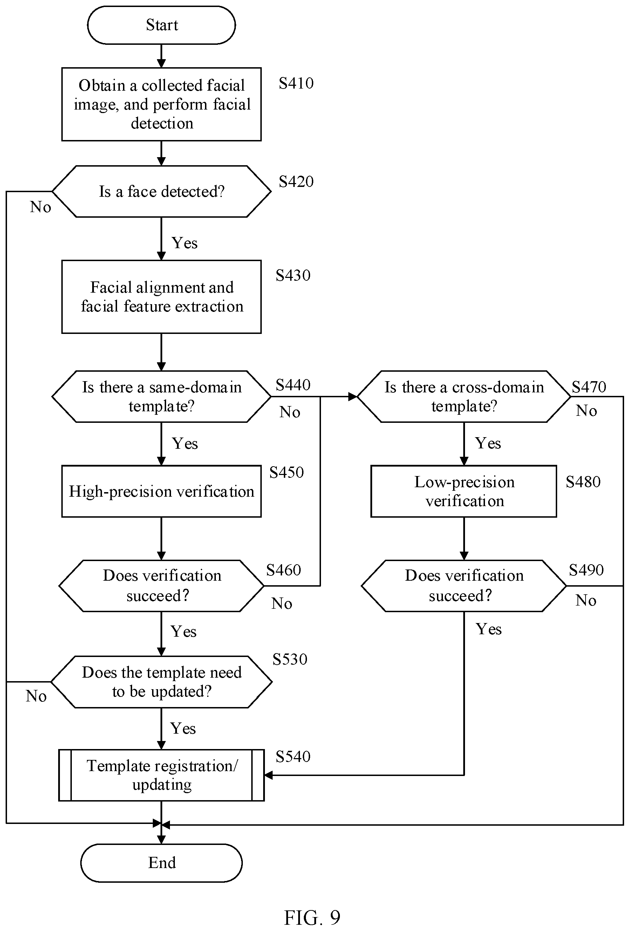

The facial template collection method provided in this embodiment is described above. However, this embodiment of this application is not limited thereto. In this embodiment, when low-precision verification fails, the user is asked whether the template needs to be registered. However, this embodiment of this application is not limited thereto. In another embodiment, as shown in FIG. 9, when low-precision verification fails, the user is not asked whether the template needs to be registered, and the process is directly ended. Compared with the flowchart in FIG. 6A and FIG. 6B, the flowchart shown in FIG. 9 omits S500 to S520. In this embodiment, each user needs to actively trigger to register a facial template. Compared with the foregoing embodiment, convenience is reduced, but system security is enhanced.

In this embodiment, a case in which the template stored in the system is a feature vector is used as an example for description. However, this embodiment of this application is not limited thereto. In another embodiment, the template stored in the system may alternatively be a facial image that is not processed or processed (face cropping and alignment).

In this embodiment, a case of a deep learning-based facial recognition algorithm is used as an example for description. However, this embodiment of this application is not limited thereto. In another embodiment, another comparison-based facial recognition algorithm may alternatively be applied.

In this embodiment, a case in which the facial image is obtained by using the camera is used as an example for description. However, this embodiment of this application is not limited thereto. In another embodiment, a sensor other than the camera may alternatively be used to obtain the facial image. For example, a radar may be used to obtain the facial image.

In this embodiment, a case in which the pre-stored template image information is stored in the storage unit of the device to which the computing unit belongs is used as an example for description. However, this embodiment of this application is not limited thereto. In another embodiment, the pre-stored template image information may be stored in a server. The computing unit may obtain the pre-stored template image information from the server by using a communication unit of the device to which the computing unit belongs.

It should be understood that steps in the template collection method in FIG. 6A and FIG. 6B may be partially or completely performed by the computing units of the devices in FIG. 1, or may be partially or completely performed by the server 40. For example, the computing unit may send the obtained facial image to the server 40, and the server 40 determines whether a facial template in a same domain as the facial image exists, and sends a determining result to the computing unit. Alternatively, the server 40 may perform high-precision verification and low-precision verification described above, and send a verification result to the computing unit. Alternatively, the server 40 may register a facial template based on the facial image when facial verification succeeds.

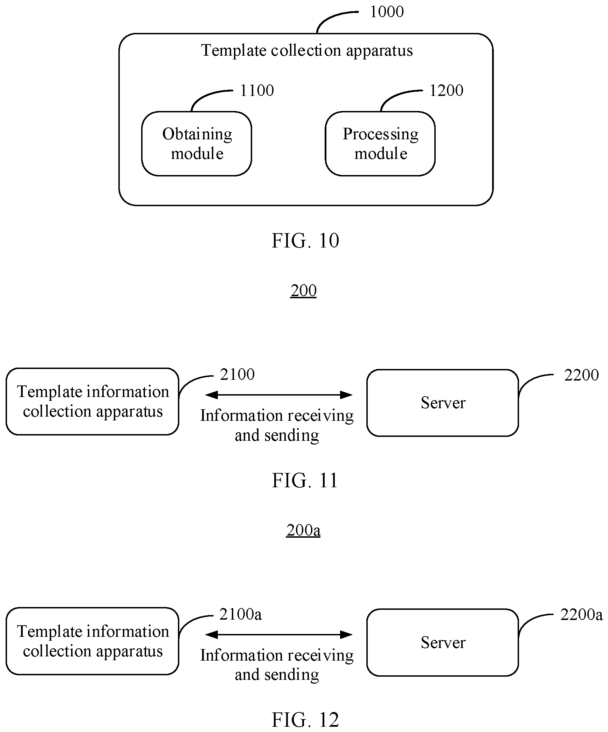

FIG. 10 is a schematic diagram of a structure of a template collection apparatus according to an embodiment of this application. The template collection apparatus may be a terminal, or may be a chip or a system on chip in the terminal, and may implement the template collection method shown in FIG. 3 and the foregoing optional embodiments. As shown in FIG. 10, a template collection apparatus 1000 includes an obtaining module 1100 and a processing module 1200, where the obtaining module 1100 is configured to obtain collected first image information; the obtaining module 1200 is further configured to obtain first template image information from pre-stored template image information, where the first template image information and the first image information belong to different domains; and the processing module 1200 is configured to update the pre-stored template image information based on the first image information when the first image information matches the first template image information.

Optionally, the obtaining module 110 is further configured to obtain second template image information from the pre-stored template image information, where the second template image information and the first image information belong to a same domain; and the obtaining module 110 is further configured to obtain the first template image information from the pre-stored template image information when the second template image information does not match the first image information.

Optionally, the obtaining module 110 is further configured to obtain collected second image information; the obtaining module 110 is further configured to obtain the second template image information from the pre-stored template image information, where the second template image information and the second image information belong to a same domain; and the processing module 120 is further configured to update the pre-stored template image information based on the second image information when the second image information matches the second template image information and a registration time of the second template image information exceeds a time threshold.

Optionally, the obtaining module 110 is further configured to obtain collected second image information; the obtaining module 110 is further configured to obtain the second template image information from the pre-stored template image information, where the second template image information and the second image information belong to a same domain; and the processing module 120 is further configured to update the pre-stored template image information based on the second image information when a matching degree between the second image information and the second template image information is greater than a first threshold and less than a second threshold.

Optionally, the obtaining module 110 is further configured to obtain collected third image information; the obtaining module 110 is further configured to obtain third template image information from the pre-stored template image information, where the third template image information and the third image information belong to different domains, and the third template image information and the first template image information belong to different domains; and the processing module 110 is further configured to update the pre-stored template image information based on the third image information when the third image information matches the third template image information, where the third image information matches the third template image information when a matching degree between the third image information and the third template image information is greater than a third threshold.

Optionally, the processing module 120 is further configured to send prompt information to a user, where the prompt information is used to request the user to agree to update the pre-stored template image information, or notify the user that the pre-stored template image information is updated.

It should be understood that the template collection apparatus in this embodiment of this application may be implemented by software, for example, a computer program or instructions having the foregoing functions, and the corresponding computer program or the corresponding instructions may be stored in a memory inside the terminal. A processor reads the corresponding computer program or the corresponding instructions in the memory to implement the foregoing functions. Alternatively, the image collection apparatus in this embodiment of this application may be implemented by hardware. The processing module 1200 is a processor, and the obtaining module 1110 is a transceiver circuit or an interface circuit. Alternatively, the template collection apparatus in this embodiment of this application may be implemented by a combination of a processor and a software module.

It should be understood that, for processing details and effects of the apparatus in this embodiment of this application, refer to the template collection method in FIG. 3 and related descriptions of the foregoing optional embodiments. Details are not described herein again.

FIG. 11 is a schematic diagram of a structure of a template collection system according to an embodiment of this application, and the template collection system performs the template collection method shown in FIG. 3. As shown in FIG. 11, a template collection system 200 includes a template collection apparatus 2100 and a server 2200. The template collection apparatus 2100 is configured to send collected first image information. The collected first image information is from a sensor. The server 2200 is configured to receive the first image information from the template collection apparatus.

The server 2200 is further configured to obtain first template image information from pre-stored template image information, where the first template image information and the first image information belong to different domains. The server 2200 is further configured to update the pre-stored template image information based on the first image information when the first image information matches the first template image information. The server 2200 may compare a similarity between a target object included in the first image information and a target object included in the first template image information. When the similarity is greater than a specified threshold, the first image information matches the obtained template image information.

Optionally, the server 2200 is further configured to: obtain second template image information from the pre-stored template image information, where the second template image information and the first image information belong to a same domain; and obtain the first template image information from the pre-stored template image information when the second template image information does not match the first image information.

Optionally, the template collection apparatus 2100 is further configured to send collected second image information. The server 2200 is further configured to receive the second image information from the template collection apparatus 2100. The server 2200 is further configured to perform steps S314 and S315 in the template collection method in FIG. 3. In some embodiments, the server 2200 is further configured to perform step S315c instead of step S315.

Optionally, the template collection apparatus 2100 is further configured to send collected second image information, where the second image information includes a plurality of pieces of image information. The server 2200 is further configured to receive the second image information from the template collection apparatus 2100. The server 2200 is further configured to perform steps S317 and S318 in the template collection method in FIG. 3.

Optionally, the template collection apparatus 2100 is further configured to send collected third image information.

The server 2200 is further configured to receive the third image information from the template collection apparatus 2100. The server 2200 is further configured to perform steps S320 and S321 in the template collection method in FIG. 3.

It should be understood that, for technical details and beneficial effects of the template collection system 200 shown in FIG. 11, refer to the template collection method shown in FIG. 3 and related descriptions in the foregoing optional embodiments. Details are not described herein again.

FIG. 12 is a schematic diagram of a structure of a template collection system according to an embodiment of this application, and the template collection system performs the template collection method shown in FIG. 3. As shown in FIG. 12, a template collection system 200a includes a template collection apparatus 2100a and a server 2200a. The template collection apparatus 2100a is configured to send collected first image information. The server 2200a is configured to receive the first image information from the template collection apparatus 2100a. The server 2200a is further configured to obtain first template image information from pre-stored template image information, where the first template image information and the first image information belong to different domains.

The server 2200a is further configured to send the first template image information. The template collection apparatus 2100a is further configured to receive the first template image information from the server 2200a. The template collection apparatus 2100a is further configured to send indication information to the server 2200a based on the first image information when the first image information matches the first template image information, where the indication information is used to indicate the server 2200a to update the pre-stored template image information. The indication information may include template image information generated based on the first image information, and information indicating an updating manner. The updating manner includes adding the generated template image information or replacing the first template image information with the generated template image information. The template collection apparatus 2100a may compare a similarity between a target object included in the first image information and a target object included in the first template image information. When the similarity is greater than a specified threshold, the first image information matches the obtained template image information. The server 2200a is further configured to update the pre-stored template image information when receiving the indication information from the template collection apparatus 2100a.

Optionally, the template collection apparatus 2100a is further configured to send collected second image information. The server 2200a is further configured to receive the second image information from the template collection apparatus 2100a. The server 2200a is further configured to obtain second template image information from the pre-stored template image information, where the second template image information and the second image information belong to a same domain. The server 2200a is further configured to send the second template image information.

The template collection apparatus 2100a is further configured to receive the second template image information from the server 2200a. The template collection apparatus 2100a is further configured to send indication information to the server 2200a based on the second image information when the second image information matches the second template image information, and a registration time of the second template image information exceeds a time threshold, or when a matching degree between the second image information and the second template image information is greater than a first threshold and less than a second threshold, where the indication information is used to indicate the server 2200a to update the pre-stored template image information. The indication information may include template image information generated based on the second image information, and information indicating an updating manner. The updating manner includes adding the template image information or replacing the second template image information with the template image information.

Optionally, the template collection apparatus 2100a is further configured to send collected third image information. The server 2200a is further configured to receive the third image information from the template collection apparatus 2100a. The server 2200a is further configured to obtain third template image information from the pre-stored template image information, where the third template image information and the third image information belong to different domains, and the third template image information and the first template image information belong to different domains. The server 2200a is further configured to send the third template image information.

The template collection apparatus 2100a is further configured to receive the third template image information from the server 2200a. The template collection apparatus 2100a is further configured to send indication information to the server 2200a based on the third image information when the third image information matches the third template image information, where the indication information is used to indicate the server 2200a to update the pre-stored template image information. The indication information may include template image information generated based on the third image information, and information indicating an updating manner. The updating manner includes adding the template image information or replacing the third template image information with the template image information.

It should be understood that, for technical details and beneficial effects of the template collection system 200 shown in FIG. 12, refer to the template collection method shown in FIG. 3 and related descriptions in the foregoing optional embodiments. Details are not described herein again.

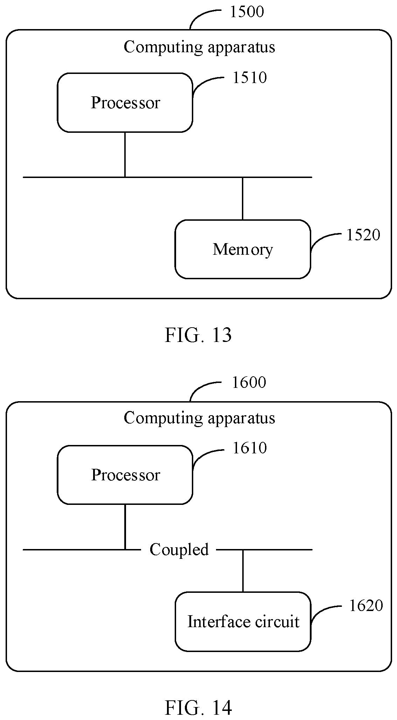

FIG. 13 is a schematic diagram of a structure of a computing apparatus 1500 according to an embodiment of this application. The computing apparatus may be used as a template collection apparatus, to perform the template collection method shown in FIG. 1 to FIG. 3 and the foregoing optional embodiments. The computing apparatus may be a terminal, or may be a chip or a system on chip in the terminal. As shown in FIG. 13, the computing apparatus 1500 includes a processor 1510 and a memory 1520.

The processor 1510 may be connected to the memory 1520. The memory 1520 may be configured to store program code and data. Therefore, the memory 1520 may be a storage unit in the processor 1510, an external storage unit independent of the processor 1510, or a component including the storage unit in the processor 1510 and the external storage unit independent of the processor 1510.

Optionally, the computing apparatus 1500 may further include a communication interface. The communication interface may be configured to communicate with another apparatus.

Optionally, the computing apparatus 1500 may further include a bus. The memory 1520 and the communication interface may be connected to the processor 1510 by using the bus. The bus may be a peripheral component interconnect standard (Peripheral Component Interconnect, PCI) bus, an extended industry standard architecture (Extended Industry Standard Architecture, EISA) bus, or the like. The bus may be classified into an address bus, a data bus, a control bus, and the like. For ease of indication, the bus is indicated by using only one line in FIG. 13. However, it does not indicate that there is only one bus or only one type of bus.

It should be understood that in this embodiment of this application, the processor 1510 may be a central processing unit. The processor may be alternatively another general-purpose processor, a digital signal processor (digital signal processor, DSP), an application specific integrated circuit (application specific integrated circuit, ASIC), a field programmable gate array (field programmable gate Array, FPGA) or another programmable logic device, a discrete gate or transistor logic device, or a discrete hardware component. The general purpose processor may be a microprocessor, or the processor may be any conventional processor, or the like. Alternatively, the processor 1510 uses one or more integrated circuits to execute a related program, to implement the technical solutions provided in embodiments of this application.

The memory 1520 may include a read-only memory and a random access memory, and provide instructions and data for the processor 1510. A part of the processor 1510 may further include a non-volatile random access memory. For example, the processor 1510 may further store information of a device type.

When the computing apparatus 1500 runs, the processor 1510 executes computer executable instructions in the memory 1520 to perform the operation steps of the foregoing template collection method.

It should be understood that the computing apparatus 1500 according to this embodiment of this application may correspond to a corresponding execution body of the method according to embodiments of this application, and the foregoing and other operations and/or functions of modules in the computing apparatus 1500 are separately intended to implement corresponding processes of the methods in this embodiment. For simplicity, details are not described herein again.

FIG. 14 is a schematic diagram of a structure of a computing apparatus according to an embodiment of this application. The computing apparatus may be used as an image collection apparatus, to perform the template collection method shown in FIG. 1 to FIG. 3 and the foregoing optional embodiments. The computing apparatus may be a terminal, or may be a chip or a system on chip in the terminal. As shown in FIG. 14, the computing apparatus 1600 includes a processor 1610, and an interface circuit 1620 coupled to the processor 1610. It should be understood that although FIG. 14 shows only one processor and one interface circuit, the computing apparatus 1600 may include another quantity of processors and interface circuits.

The interface circuit 1620 is configured to communicate with another component of the terminal, for example, a memory or another processor. The processor 1610 is configured to perform signal interaction with another component through the interface circuit 1620. The interface circuit 1620 may be an input/output interface of the processor 1610.

For example, the processor 1610 reads, through the interface circuit 1620, a computer program or instructions in a memory coupled to the processor 1610, and decodes and executes the computer program or the instructions. It should be understood that the computer program or the instructions may include the foregoing terminal function programs, or may include a foregoing function program of an image processing apparatus applied to the terminal. When the corresponding function program is decoded and executed by the processor 1610, the terminal or the image processing apparatus in the terminal may implement the solutions in the image processing method provided in embodiments of this application.

Optionally, these terminal function programs are stored in a memory outside the computing apparatus 1600. When the terminal function programs are decoded and executed by the processor 1600, the memory temporarily stores some or all content of the terminal function programs.

Optionally, these terminal function programs are stored in a memory in the computing apparatus 1600. When the memory in the computing apparatus 1600 stores a terminal function program, the computing apparatus 1600 may be disposed in the terminal in this embodiment of the present invention.

Optionally, some content of the terminal function programs is stored in the memory outside the computing apparatus 1800, and other content of the terminal function programs is stored in the memory in the computing apparatus 1800.

It should be understood that the apparatuses shown in FIG. 10 to FIG. 14 that have a same function may be combined with each other. For related design details of the apparatuses shown in FIG. 10 to FIG. 14 that have a same function and the optional embodiments, refer to each other, or refer to the template collection method shown in FIG. 1 to FIG. 3 or FIG. 9 and related design details of the optional embodiments. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected according to actual requirements to achieve the objectives of embodiments of this application.

In addition, function units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, some of the technical solutions may be implemented in the form of a software product. The computer software product is stored in a storage medium and includes several instructions for instructing a computing device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

An embodiment of this application further provides a computer-readable storage medium. The computer-readable storage medium stores a computer program. When the computer program is executed by a processor, at least one of the solutions described in the foregoing embodiments is implemented.

The computer storage medium according to this embodiment of this application may be any combination of one or more computer-readable media. The computer-readable medium may be a computer-readable signal medium or a computer-readable storage medium. The computer-readable storage medium may be, for example, but not limited to, an electric, magnetic, optical, electromagnetic, infrared, or semi-conductor system, apparatus, or device, or any combination thereof. More specific examples (a non-exhaustive list) of the computer-readable storage medium include an electrical connection having one or more wires, a portable computer disk, a hard disk, a random access memory (RAM), a read-only memory (ROM), an erasable programmable read-only memory (EPROM, Erasable Programmable Read-Only Memory or flash memory), an optical fiber, a portable compact disk read-only memory (CD-ROM), an optical storage device, a magnetic storage device, or any proper combination thereof. In this specification, the computer-readable storage medium may be any tangible medium containing or storing a program. The program may be used by an instruction execution system, apparatus, or device, or may be used in combination with an instruction execution system, apparatus, or device.

A computer-readable signal medium may include a data signal propagated in a baseband or propagated as part of a carrier, where the data signal carries computer-readable program code. Such a propagated data signal may take a variety of forms, including but not limited to an electromagnetic signal, an optical signal, or any suitable combination thereof. The computer-readable signal medium may alternatively be any computer-readable medium other than the computer-readable storage medium. The computer-readable medium may send, propagate, or transmit the program used by the instruction execution system, apparatus, or device, or used in combination with the instruction execution system, apparatus, or device.

The program code contained in the computer-readable medium may be transmitted by using any appropriate medium, including but not limited to radio, an electric wire, an optical cable, an RF (Radio Frequency, radio frequency), or any appropriate combination thereof.

Computer program code for performing the operations in this application may be written in one or more programming languages, or a combination thereof. The programming languages include an object-oriented programming language, such as Java, Smalltalk, and C++, and also include a conventional procedural programming language, such as a "C" language or a similar programming language. The program code may be executed entirely on a user computer, or some may be executed on a user computer as a separate software package, or some may be executed on a user computer while some is executed on a remote computer, or the code may be entirely executed on a remote computer or a server. In a case involving a remote computer, the remote computer may be connected to a user computer through any type of network, including a local area network (LAN, Wireless Local Area Network) or a wide area network (WAN, Wide Area Network), or may be connected to an external computer (for example, connected through the Internet by using an Internet service provider).

An embodiment of this application further provides a computer program. When the computer program product is implemented by a computer, the computer is enabled to perform the at least one of the solutions described in the foregoing embodiments.

It should be understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, terms such as "first", "second", and "third" in the specification and claims are merely used to distinguish between similar objects, and do not represent a specific order of the objects. It may be understood that specific orders or sequences may be exchanged if permitted, so that the embodiments of this application described herein can be implemented in an order other than the order illustrated or described herein.

Used reference numerals such as S110 and S 120 that indicate steps do not necessarily indicate that the steps are to be performed based on the order, and consecutive steps may be transposed if allowed, or may be performed simultaneously. The expression "above" of quantity and value shall be interpreted as including the number.

The term "include" used in this specification and claims should not be construed as being limited to the content listed below, and does not exclude other elements or steps. Therefore, "include" should be construed as specifying existence of a mentioned feature, whole, step, or part, but does not preclude existence or addition of one or more other features, wholes, steps, or parts and their groups. Therefore, the expression "a device including an apparatus A and an apparatus B" should not be limited to a device including only components A and B.

Unless otherwise defined, all technical and scientific terms used in this specification have same meanings as those usually understood by a person skilled in the art of this application. In case of any inconsistency, the meaning described in this specification or the meaning obtained according to the content recorded in this specification shall prevail. In addition, the terms used in this specification are merely for the purpose of describing embodiments of this application, but are not intended to limit this application.

## Claims

1. A template collection method, comprising:

   obtaining collected first image information;
   obtaining first template image information from pre-stored template image information, wherein the first template image information and the first image information belong to different domains; and
   updating the pre-stored template image information based on the first image information when the first image information matches the first template image information.

2. The template collection method according to claim 1, wherein the obtaining first template image information from pre-stored template image information specifically comprises:

   obtaining second template image information from the pre-stored template image information, wherein the second template image information and the first image information belong to a same domain; and
   obtaining the first template image information from the pre-stored template image information when the second template image information does not match the first image information.

3. The template collection method according to claim 1 or 2, wherein the method further comprises:

   obtaining collected second image information;

obtaining second template image information from the pre-stored template image information, wherein the second template image information and the second image information belong to a same domain; and

updating the pre-stored template image information based on the second image information when the second image information matches the second template image information, and a registration time of the second template image information exceeds a time threshold.

4. The template collection method according to claim 1 or 2, wherein the method further comprises:

obtaining collected second image information;

obtaining second template image information from the pre-stored template image information, wherein the second template image information and the second image information belong to a same domain; and

updating the pre-stored template image information based on the second image information when a matching degree between the second image information and the second template image information is greater than a first threshold and less than a second threshold.

5. The template collection method according to claim 3, wherein

the first image information matches the first template image information when a matching degree between the first image information and the first template image information is greater than a third threshold;

the second image information matches the second template image information when a matching degree between the second image information and the second template image information is greater than a fourth threshold; and

the third threshold is different from the fourth threshold.

6. The template collection method according to any one of claims 1 to 5, wherein

the first image information matches the first template image information when the matching degree between the first image information and the first template image information is greater than a third threshold; and

the method further comprises:

obtaining collected third image information;

obtaining third template image information from the pre-stored template image information, wherein the third template image information and the third image information belong to different domains, and the third template image information and the first template image information belong to different domains; and

updating the pre-stored template image information based on the third image information when the third image information matches the third template image information, wherein

the third image information matches the third template image information when a matching degree between the third image information and the third template image information is greater than the third threshold.

7. The template collection method according to any one of claims 1 to 6, wherein the domain is used to indicate one or more features in a format, a color, or a source of the image information.

8. The template collection method according to claim 7, wherein the domain comprises an RGB domain and an IR domain.

9. The template collection method according to any one of claims 1 to 8, wherein the method further comprises: sending prompt information to a user, wherein the prompt information is used to request the user to agree to update the pre-stored template image information, or notify the user that the pre-stored template image information is updated.

10. A template collection apparatus, wherein the apparatus comprises an obtaining module and a processing module, wherein

the obtaining module is configured to obtain collected first image information;

the obtaining module is further configured to obtain first template image information from pre-stored template image information, wherein the first template image information and the first image information belong to different domains; and

the processing module is configured to update the pre-stored template image information based on the first image information when the first image information matches the first template image information.

11. The template collection apparatus according to claim 10, wherein the obtaining module is further configured to:
obtain second template image information from the pre-stored template image information, wherein the second template image information and the first image information belong to a same domain; and
obtain the first template image information from the pre-stored template image information when the second template image information does not match the first image information.

12. The template collection apparatus according to claim 10 or 11, wherein

the obtaining module is further configured to obtain collected second image information;
the obtaining module is further configured to obtain second template image information from the pre-stored template image information, wherein the second template image information and the second image information belong to a same domain; and
the processing module is further configured to update the pre-stored template image information based on the second image information when the second image information matches the second template image information, and a registration time of the second template image information exceeds a time threshold.

13. The template collection apparatus according to claim 10 or 11, wherein the processing module is further configured to obtain collected second image information;

the obtaining module is further configured to obtain second template image information from the pre-stored template image information, wherein the second template image information and the second image information belong to a same domain; and
the processing module is further configured to update the pre-stored template image information based on the second image information when a matching degree between the second image information and the second template image information is greater than a first threshold and less than a second threshold.

14. The template collection apparatus according to claim 12, wherein

the first image information matches the first template image information when a matching degree between the first image information and the first template image information is greater than a third threshold;
the second image information matches the second template image information when a matching degree between the second image information and the second template image information is greater than a fourth threshold; and
the third threshold is different from the fourth threshold.

15. The template collection apparatus according to any one of claims 10 to 14, wherein the first image information matches the first template image information when the matching degree between the first image information and the first template image information is greater than a third threshold;

the obtaining module is further configured to obtain collected third image information;
the obtaining module is further configured to obtain third template image information from the pre-stored template image information, wherein the third template image information and the third image information belong to different domains, and the third template image information and the first template image information belong to different domains; and
the processing module is further configured to update the pre-stored template image information based on the third image information when the third image information matches the third template image information, wherein the third image information matches the third template image information when a matching degree between the third image information and the third template image information is greater than the third threshold.

16. The template collection apparatus according to any one of claims 10 to 15, wherein the domain is used to indicate one or more features in a format, a color, or a source of the image information.

17. The template collection apparatus according to claim 16, wherein
the domain comprises an RGB domain and an IR domain.

18. The template collection apparatus according to any one of claims 10 to 17, wherein the processing module is further configured to send prompt information to a user, wherein the prompt information is used to request the user to agree to update the pre-stored template image information, or notify the user that the pre-stored template image information is updated.

**19.** A template collection system, comprising a template collection apparatus and a server, wherein

the template collection apparatus is configured to send collected first image information;

the server is configured to receive the first image information from the template collection apparatus;

the server is further configured to obtain first template image information from pre-stored template image information, wherein the first template image information and the first image information belong to different domains; and

the server is further configured to update the pre-stored template image information based on the first image information when the first image information matches the first template image information.

**20.** An electronic apparatus, comprising a processor and a memory, wherein
the memory stores program instructions, and when the program instructions are executed by the processor, the processor is enabled to perform the template collection method according to any one of claims 1 to 9.

**21.** An electronic apparatus, comprising a processor and an interface circuit, wherein the processor is coupled to a memory through the interface circuit, and the processor is configured to execute program code in the memory, to enable the processor to perform the template collection method according to any one of claims 1 to 9.

**22.** A computer storage medium, comprising computer instructions, wherein when the computer instructions runs on an electronic device, the electronic device is enabled to perform the template collection method according to any one of claims 1 to 9.

**23.** A computer program product, wherein when the computer program product runs on a computer, the computer is enabled to perform the template collection method according to any one of claims 1 to 9.

| Obtain first image information from a sensor | S110 |

| Obtain pre-stored template image information based on a domain to which the first image information belongs, where the template image information is used for comparison with the first image information | S120 |

FIG. 1

| Obtain first image information from a sensor | S210 |

| Obtain pre-stored template image information | S220 |

| Preferentially compare second template image information with the first image information, where the second image information is template image information that is in the pre-stored template image information and that belongs to a same domain with the first image information | S230 |

FIG. 2

Obtain collected first image information | S310

Obtain first template image information from pre-stored template image information, where the first template image information and the first image information belong to different domains | S311

Update the pre-stored template image information based on the first image information when the first image information matches the first template image information | S312

FIG. 3

FIG. 4

FIG. 5

Start

Obtain a collected facial image, and perform facial detection    S410

Is a face detected?    S420

No

Yes

Facial alignment and facial feature extraction    S430

Is there a same-domain template?    S440

No    TO FIG. 6B

Yes

High-precision verification    S450

Does verification succeed?    S460

No

Yes

Does the template need to be updated?    S530

No

Yes

Template registration/updating    S540    TO FIG. 6B

End

FIG. 6A

CONT. FROM FIG. 6A

Is there a cross-domain template? S470

No

Yes

Low-precision verification S480

Does verification succeed? S490

No

Yes

Does a template need to be registered? S500

No

Yes

Obtain authentication information of a user S510

Does authentication succeed? S520

No

Yes

CONT. FROM FIG. 6A

FIG. 6B

```
                    ┌─────────────┐
                    │    Start    │
                    └──────┬──────┘
                           │
                           ▼
                  ┌──────────────────┐
                  │  Image quality   │     S5400
                  │   inspection     │
                  └────────┬─────────┘
                           │
                           ▼
              ╱───────────────────────╲      S5401
             ⟨   Does image quality    ⟩
              ╲  inspection succeed?   ╱─── No ──┐
               ╲─────────┬───────────╱          │
                         │                       │
                        Yes                      │
                         ▼                       │
                  ┌──────────────────┐           │
                  │  Extract a facial│   S5402    │
                  │     feature      │           │
                  └────────┬─────────┘           │
                           │                     │
                           ▼                     │
                  ┌──────────────────┐           │
                  │  Confirm an ID   │   S5403    │
                  └────────┬─────────┘           │
                           │                     │
                           ▼                     │
                  ┌──────────────────────┐       │
                  │ Template registration/│ S5404 │
                  │     updating          │       │
                  └────────┬──────────────┘       │
                           │                     │
                           ▼◄────────────────────┘
                    ┌─────────────┐
                    │     End     │
                    └─────────────┘
```

FIG. 7

Start

Obtain a facial image — S1500

Image quality inspection — S1501

Does quality inspection succeed? — S1502
No
Yes

Facial detection — S1503

Is a face detected? — S1504
No
Yes

Facial attribute inspection — S1505

Does attribute inspection succeed? — S1506
No
Yes

Facial alignment and facial feature extraction — S1507

Confirm an ID and perform template registration — S1508

Does a quantity of attempts or time of registration reach an upper limit? — S1509
No
Yes

End

FIG. 8

FIG. 9

1000

Template collection apparatus

1100

Obtaining
module

1200

Processing
module

FIG. 10

200

Template information
collection apparatus

2100

Information receiving
and sending

Server

2200

FIG. 11

200a

Template information
collection apparatus

2100a

Information receiving
and sending

Server

2200a

FIG. 12

1500

Computing apparatus

Processor 1510

Memory 1520

FIG. 13

1600

Computing apparatus

Processor 1610

Coupled

Interface circuit 1620

FIG. 14

## INTERNATIONAL SEARCH REPORT

International application No.

**PCT/CN2021/089692**

| A. | CLASSIFICATION OF SUBJECT MATTER |
| --- | --- |

G06K 9/62(2022.01)i

According to International Patent Classification (IPC) or to both national classification and IPC

| B. | FIELDS SEARCHED |
| --- | --- |

Minimum documentation searched (classification system followed by classification symbols)

G06K, G06T

Documentation searched other than minimum documentation to the extent that such documents are included in the fields searched

Electronic data base consulted during the international search (name of data base and, where practicable, search terms used)

CNABS, CNKI, DWPI, SIPOABS, CNTXT: 图像, 图象, 人脸, 面部, 识别, 匹配, 模板, 域, 跨域, 不同域, 多域, 更新, 添加, 替换, 阈值, 格式, 颜色, 来源, RGB, IR, image, face, facial, identify, match, template, domain, cross domain, different domains, multi-domain, renew, replace, add, threshold, format, color, colour, source

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110008903 A (MEGVII TECHNOLOGY LTD.) 12 July 2019 (2019-07-12) description, paragraphs [0028]-[0126] | 1-23 |
| A | CN 110458072 A (GREE ELECTRIC APPLIANCES, INC. OF ZHUHAI et al.) 15 November 2019 (2019-11-15) see entire document | 1-23 |
| A | CN 109241888 A (MEGVII TECHNOLOGY LTD.) 18 January 2019 (2019-01-18) see entire document | 1-23 |
| A | CN 107657222 A (GUANGDONG OPPO MOBILE TELECOMMUNICATIONS CO., LTD.) 02 February 2018 (2018-02-02) see entire document | 1-23 |

☐ Further documents are listed in the continuation of Box C. ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 January 2022** | **28 January 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/089692**

| Patent document cited in search report | | | Publication date (day/month/year) | Patent family member(s) | Publication date (day/month/year) |
|---|---|---|---|---|---|
| CN | 110008903 | A | 12 July 2019 | None | |
| CN | 110458072 | A | 15 November 2019 | None | |
| CN | 109241888 | A | 18 January 2019 | None | |
| CN | 107657222 | A | 02 February 2018 | None | |

Form PCT/ISA/210 (patent family annex) (January 2015)